# EUROPEAN PATENT SPECIFICATION

(11) **EP 4 354 858 B1**
(45) Date of publication and mention of the grant of the patent: **09.12.2026**
(21) Application number: 22819274.6
(22) Date of filing: 09.05.2022
(51) Int. Cl.: H04N 19/105, H04N 19/52, H04N 19/109, H04N 19/147, H04N 19/513, H04N 19/523

(54) **ENCODING METHOD AND APPARATUS USING INTER-FRAME PREDICTION, DEVICE, AND READABLE STORAGE MEDIUM**
CODIERUNGSVERFAHREN UND -VORRICHTUNG MIT INTER-FRAME-VORHERSAGE, VORRICHTUNG UND LESBARES SPEICHERMEDIUM
PROCÉDÉ ET APPAREIL DE CODAGE UTILISANT UNE PRÉDICTION INTER-TRAME, DISPOSITIF ET SUPPORT DE STOCKAGE LISIBLE

(30) Priority: 07.06.2021 CN 202110629001
(43) Date of publication of application: 17.04.2024
(73) Proprietor: Tencent Technology (Shenzhen) Company Limited, Shenzhen, Guangdong 518057 (CN)
(72) Inventor: ZHANG, Hongshun, Shenzhen, Guangdong 518057 (CN)
(74) Representative: Nederlandsch Octrooibureau
(86) International application number: PCT/CN2022/091617
(87) International publication number: WO 2022/257674

(56) References cited:
- WO-A1-2019/192301
- WO-A2-2020/070730
- CN-A- 111 818 342
- CN-A- 111 953 997
- CN-A- 112 312 131
- US-B1- 6 243 418
- HAN JINGNING ET AL: "A Technical Overview of AV1", PROCEEDINGS OF THE IEEE, IEEE. NEW YORK, US, vol. 109, no. 9, 26 February 2021 (2021-02-26), pages 1435 - 1462, XP011872733, ISSN: 0018-9219, [retrieved on 20210818], DOI: 10.1109/JPROC.2021.3058584
- CHEN J ET AL: "Algorithm description for Versatile Video Coding and Test Model 12 (VTM 12)", no. JVET-U2002 ; m56275, 12 April 2021 (2021-04-12), XP030294441, Retrieved from the Internet <URL:https://jvet-experts.org/doc_end_user/documents/21_Teleconference/wg11/JVET-U2002-v1.zip JVET-U2002-v1.docx> [retrieved on 20210412]

## Description

### RELATED APPLICATION

This application claims priority to Chinese Patent Application No. 202110629001.2, entitled "INTER PREDICTION ENCODING METHOD AND APPARATUS, DEVICE, AND READABLE STORAGE MEDIUM" filed on June 7, 2021.

### FIELD OF THE TECHNOLOGY

Embodiments of this application relate to the field of video processing, and in particular, to an encoding method, apparatus, device and a readable storage medium for inter prediction.

### BACKGROUND OF THE DISCLOSURE

In the process of video coding, an image frame input to an encoder is divided into multiple coding units (CUs), where each coding unit corresponds to multiple prediction modes and transform unit. For example, each coding unit may correspond to an intra prediction mode and an inter prediction mode, and the inter prediction mode may include four single reference frame modes: NEARESTMV, NEARMV, GLOBALMV and NEWMV.

In related technologies, for any reference frame in the NEWMV mode, it is necessary to obtain all Motion Vector Predictions (MVPs) in the NEWMV mode, and then perform motion estimation, traversal based on nine interpolation methods and traversal based on four motion modes for each MVP, and finally select an optimal MVP, an optimal motion vector, an optimal interpolation method and an optimal motion mode corresponding to the optimal MVP.

However, when inter prediction in the NEWMV mode is performed in the foregoing manner, a rate-distortion cost of each possible combination needs to be calculated, resulting in high computational complexity and low coding efficiency. D1 (CN112312131A) refers to "a Method, Apparatus, Device, and Computer Readable Storage Medium for Inter Prediction", D2 (WO2020/070730A2) refers to "Size Restriction Based On Affine Motion Information", and D3 (XP011872733) refers to "A Technical Overview of AV1".

### SUMMARY

Embodiments of this application provide an encoding method, apparatus, device, and readable storage medium for inter prediction, which can improve the coding efficiency of inter prediction in an NEWMV mode. The technical solutions are as follows:

According to one aspect, an inter prediction encoding method is provided, including: acquiring an image frame to be encoded, the image frame being divided into multiple coding units; for each of the multiple coding units, using the respective coding unit in turn as a current coding unit and performing following steps on the current coding unit: determining at least one motion vector prediction, MVP, of the current coding unit according to a pre-set inter prediction mode, and performing motion estimation on the current coding unit to obtain at least one motion vector, MV, of the current coding unit; selecting a target MVP from the at least one MVP and selecting a target MV from the at least one MV, in order to form a vector pair comprising the target MVP and the target MV; selecting, from a plurality of candidate interpolation modes, a target interpolation mode and selecting, from a plurality of candidate motion modes, a target motion mode according to the target MVP and the target MV; using the target interpolation mode and the target motion mode to encode the current coding unit.

In an optional embodiment, the performing motion estimation on the current coding unit to obtain at least one motion vector, MV of the current coding unit comprises: in a case that the at least one MVP comprises n MVPs, for each of the n MVPs, using the respective MVP in turn as a current MVP of the current coding unit and performing following steps, n being positive integer: performing the motion estimation on the current coding unit according to the current MVP to obtain an optimal MV, wherein the at least one MV comprises the optimal MV.

In an optional embodiment, the selecting a target MVP from the at least one MVP and selecting a target MV from the at least one MV, in order to form a vector pair comprising the target MVP and the target MV comprises: combining each of the at least one MVP and each of the at least one MV respectively to obtain m vector pairs, each of the m vector pairs consisting of a respective MVP and a respective MV, m being n×n when the at least one MVP comprises n MVPs, and the at least one MV comprises n MVs, n being positive integer; determining a rate-distortion cost corresponding to each of the m vector pairs respectively; selecting a vector pair from the m vector pairs according to the rate-distortion cost corresponding to each of the m vector pairs, the selected vector pair comprising the target MVP and the target MV.

In an optional embodiment, the selecting a vector pair from the m vector pairs according to the rate-distortion cost corresponding to each of the m vector pairs comprises: selecting a vector pair, corresponding to which the rate-distortion cost is minimum, from the m vector pairs.

According to another aspect, an inter prediction encoding apparatus is provided, including: an acquisition module, configured to acquire an image frame to be encoded, the image frame being divided into multiple coding units; a prediction module, configured to determine at least one motion vector prediction, MVP, of a current coding unit according to a pre-set inter prediction mode, and perform motion estimation on the current coding unit to obtain at least one motion vector, MV, of the current coding unit, in a case that, for each of the multiple coding units, the respective coding unit in turn is used as the current coding unit; select, from a plurality of candidate interpolation modes, a target interpolation mode and select, from a plurality of candidate motion modes, a target motion mode according to a target MVP and a target MV; and a determining module, configured to select the target MVP from the at least one MVP and select the target MV from the at least one MV, in order to form a vector pair comprising the target MVP and the target MV; an encoding module, configured to use the target interpolation mode and the target motion mode to encode the current coding unit.

According to another aspect, a computer device is provided, the computer device including a processor and a memory, the memory storing a computer program, the computer program being loaded and executed by the processor to implement the inter prediction encoding method.

According to another aspect, a computer-readable storage medium is provided, the computer-readable storage medium storing a computer program, the computer program being loaded and executed by a processor to implement the inter prediction encoding method.

According to another aspect, a computer program product or computer program is provided, the computer program product or computer program including computer instructions stored in a computer-readable storage medium. A processor of a computer device reads the computer instructions from the computer-readable storage medium, and the processor executes the computer instructions, to enable the computer device to execute the inter prediction encoding method.

The technical solutions provided in the embodiments of this application have at least the following beneficial effects.

In a scenario of encoding an image frame using a specified inter prediction mode (for example, NEWMV mode), a vector pair including a target MVP and a target motion vector (for example, an optimal vector pair) is determined first, and then an optimal interpolation mode and an optimal motion mode are determined for this vector pair, i.e., it is not necessary to perform interpolation mode traversal and motion mode traversal for all MVPs and motion vectors, thereby reducing the calculation amount of rate-distortion costs and the computational complexity, and further improving the encoding efficiency in the specified inter prediction mode.

### BRIEF DESCRIPTION OF THE DRAWINGS

FIG. 1 is a schematic diagram of a standard coding framework according to an example embodiment of this application.
FIG. 2 is a schematic diagram of CU partitioning types according to an example embodiment of this application.
FIG. 3 is a schematic diagram of a position of an MVP in a single reference frame mode corresponding to inter prediction according to an example embodiment of this application.
FIG. 4 is a schematic diagram of a process of selecting an optimal result in a NEWMV mode according to related technologies.
FIG. 5 is a schematic diagram of an overall process of an inter prediction encoding method according to an example embodiment of this application.
FIG. 6 is a flowchart of an inter prediction encoding method according to an example embodiment of this application.
FIG. 7 is a schematic diagram of a TZ search template based on the embodiment shown in FIG. 6.
FIG. 8 is a schematic diagram of additional points based on the search provided in FIG. 6.
FIG. 9 is a partial schematic diagram of searching for position points in a raster scanning manner based on the embodiment shown in FIG. 6.
FIG. 10 is a flowchart of an inter prediction encoding method according to another example embodiment of this application.
FIG. 11 is a flowchart of an inter prediction encoding method according to another example embodiment of this application.
FIG. 12 is a structural block diagram of an inter prediction encoding apparatus according to an example embodiment of this application.
FIG. 13 is a structural block diagram of an inter prediction encoding apparatus according to another example embodiment of this application.
FIG. 14 is a structural block diagram of a computer device according to an example embodiment of this application.

### DESCRIPTION OF EMBODIMENTS

First, an environment for implementing a method of the embodiments of this application is described.

An inter prediction encoding method provided in embodiments of this application may be applied to a terminal or a server.

For example, when the inter prediction encoding method is applied to a terminal, the terminal includes but is not limited to a mobile phone, a computer, an intelligent voice interaction device, a smart household appliance, an on-board terminal, and the like. When the terminal is implemented as an on-board terminal, the method provided in the embodiments of this application may be applied to an on-board scenario, to be specific, used for inter prediction encoding of a video on the on-board terminal as a part of an intelligent traffic system (ITS). The intelligent traffic system is a comprehensive transportation system that effectively applies advanced technologies (such as information technology, computer technology, data communication technology, sensor technology, electronic control technology, automatic control theory, operational research, artificial intelligence, etc.) to transportation, service control and vehicle manufacturing to strengthen the relationship among vehicles, roads and users, to ensure safety, improve efficiency, improve environment and save energy.

When the inter prediction encoding method is applied to a server, the server may encode a video, and send an encoded video stream to a terminal or another server. The server may be an independent physical server, or a server cluster or distributed system composed of multiple physical servers, or a cloud server that provides basic cloud computing services such as cloud services, cloud databases, cloud computing, cloud functions, cloud storage, network services, cloud communication, middleware services, domain name services, security services, content delivery network (CDN), and big data and artificial intelligence platforms.

In all embodiments, the server may also be implemented as a node in a blockchain system. The blockchain is essentially a decentralized database and is a string of data blocks generated through association by using a cryptographic method. Each data block includes information of a batch of network transactions, the information being used for verifying the validity of information of the data block (anti-counterfeiting) and generating a next data block. The blockchain may include a blockchain underlying platform, a platform product service layer, and an application service layer.

Second, examples are given to describe the coding framework, CU partitioning type, intra prediction mode and MVP derivation process involved in the embodiments of this application.

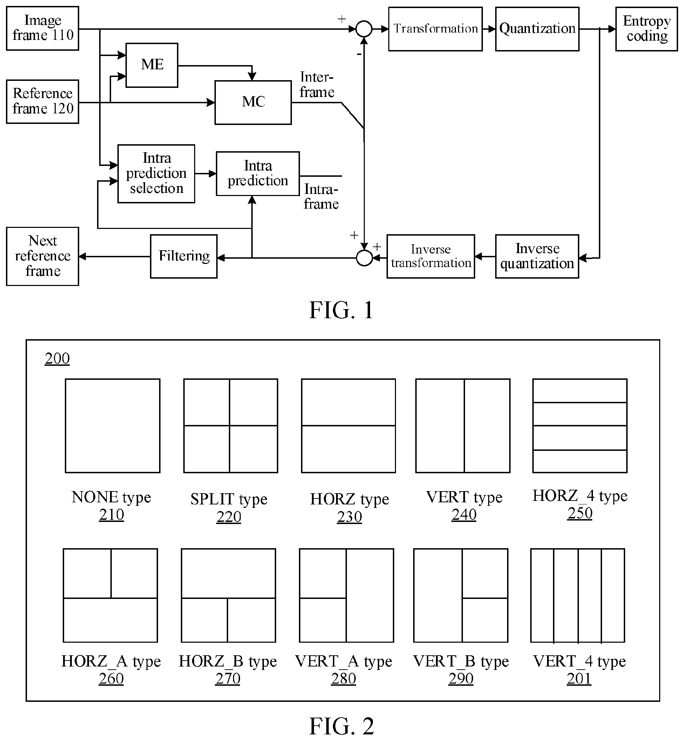

FIG. 1 is a schematic diagram of a standard coding framework according to an example embodiment of this application. As shown in FIG. 1, when an image frame 110 is sent to an encoder, the encoder first partitions the image frame 110 into coding tree units (CTUs), and then further partitions the coding tree units to obtain coding units (CUs). Each CU may correspond to multiple prediction modes and transform units (TUs). The encoder performs prediction for each CU by using the prediction modes, and obtains predicted values (MVPs) corresponding to each CU. The prediction performed for each CU may include inter prediction and intra prediction.

During the inter prediction, first, motion estimation (ME) is performed on the image frame 110 and a reference frame 120, and then motion compensation (MC) is performed on a result of the motion estimation to obtain a predicted value. The predicted value is subtracted from input data (i.e., an actual motion vector (MV) value) to obtain a residual (Motion Vector Difference, MVD). Then the residual is transformed and quantized to obtain a residual coefficient. The residual coefficient is sent to an entropy coding module to output a bit stream. At the same time, after the residual coefficient is inversely quantized and inversely transformed, a residual value of a reconstructed image is obtained. After the residual value and the predicted value are summed up, the reconstructed image is obtained. After being filtered, the reconstructed image enters a reference frame queue as a reference frame of the next image frame, so that subsequent frames can be encode backward in sequence.

In the process of intra prediction, first, intra prediction mode selection is performed based on the image frame 110, and intra prediction is performed based on the reconstructed image and a current frame to obtain an intra prediction result.

FIG. 2 is a schematic diagram of a CU partitioning type according to an example embodiment of this application. As shown in FIG. 2, CU partitioning types 200 include: NONE type 210; SPLIT type 220; HORZ type 230; VERT type 240; HORZ_4 type 250; HORZ_A type 260; HORZ_B type 270; VERT_A type 280; VERT_B type 290; and VERT_4 type 201.

Based on the above CU partitioning types, there are 22 block sizes for CUs, namely, 4×4, 4×8, 8×4, 8×8, 8×16, 16×8, 16×16, 16×32, 32×16, 32×32, 32×64, 64×32, 64×64, 64×128, 128×64, 128×128, 4×16, 16×4, 8×32, 32×8, 16×64 and 64×16 respectively.

Prediction modes of a CU include intra prediction modes and inter prediction modes. When a prediction type is determined, first, in the same prediction type, different prediction modes under this prediction type are compared to find an optimal prediction mode under this prediction type. For example, in the intra prediction type, different intra prediction modes are compared to determine an optimal intra prediction mode under the intra prediction type. Rate-distortion costs of different intra prediction modes may be compared to determine the intra prediction mode with a minimum rate-distortion cost. For example, in the inter prediction type, different inter prediction modes are compared to determine an optimal prediction mode in the inter prediction type. Rate-distortion costs of different inter prediction modes may be compared to determine the inter prediction mode with a minimum rate-distortion cost. Then the intra prediction modes are compared with the inter prediction modes to find an optimal prediction mode for the current CU. For example, the rate-distortion costs of the optimal intra prediction and the optimal inter prediction mode are compared, and the mode with a minimum rate-distortion cost is determined as the optimal prediction mode for the current CU. In addition, TU transformation is performed on the CU, and each CU corresponds to multiple transformation types, from which an optimal transformation type is found. Then different CU partitioning types are compared, and an optimal CU partitioning type is found according to the rate-distortion cost. Finally, the image frame is divided into CUs.

In all embodiments, the inter prediction modes include four single reference frame modes, namely, NEARESTMV, NEARMV, GLOBALMV and NEWMV, and eight combined reference frame modes, namely, NEAREST_NEARESTMV, NEAR_NEARMV, NEAREST_NEWMV, NEW_NEARESTMV, NEAR_NEWMV, NEW_NEARMV, GLOBAL_GLOBALMV and NEW_NEWMV. The NEARESTMV mode and the NEARMV mode mean that a motion vector (i.e., MV) of a prediction block is derived from surrounding block information, and there is no need to transmit the motion vector difference (MVD). The NEWMV mode means that the MVD needs to be transmitted. The GLOBALMV mode means that MV information of the CU is derived from global motion.

The NEARESTMV, NEARMV and NEWMV modes all depend on the derivation of MVPs. For a given reference frame, based on the AV1 standard, four MVPs are calculated according to protocol rules.

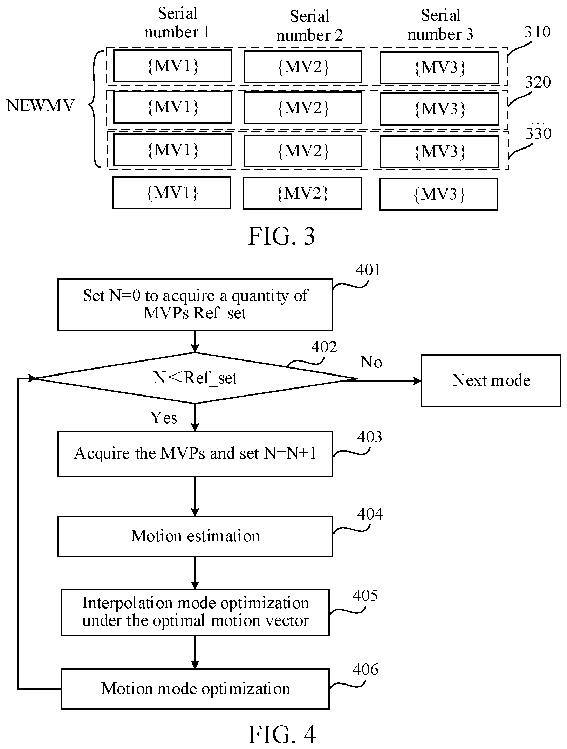

For example, in the process of deriving MVPs, first, information of CUs in the first, third and fifth columns on the left of and the first, third and fifth rows on the top of the current CU is scanned in a hopping manner, the CUs using the same reference frame are selected, and MVs of the CUs using the same reference frame are de-duplicated. If the quantity of MVs whose reference frames are not the same is less than (or equal to) 8, first, the requirement on CUs is relaxed, CUs using reference frames in the same direction are selected, and MVs of the CUs using reference frames in the same direction are de-duplicated and added. If the quantity of MVs is still less than (or equal to) 8, global motion vectors are added. Eight MVs are selected and sorted by importance, and the four MVs with the highest importance are obtained. The zeroth MV is in the NEARESTMV mode; the first MV to the third MV are in the NEARMV mode; the NEWMV mode uses one of the zeroth MV to the second MV. For example, referring to FIG. 3, which shows a schematic diagram of a position of an MVP in a single reference frame mode corresponding to inter prediction according to an example embodiment of this application. As shown in FIG. 3, after the four MVs with the highest importance are selected based on the above MVP derivation process, the NEWMV mode uses one of the zeroth MV 310, the first MV 320 and the second MV 330 as the MVP.

In all embodiments, each of the above inter prediction modes of the inter prediction type corresponds to a different reference frame. For example, refer to Table 1 below.

**Table 1**

| Reference frame type | Value | Meaning |
|---|---|---|
| INTRA_FRAME | 0 | Intra prediction |
| LAST_FRAME | 1 | The image frame sequence is smaller than the reference frame closest to the current frame, forward reference |
| LAST2_FRAME | 2 | The image frame sequence is smaller than the reference frame second closest to the current frame in the current frame, forward reference |
| LAST3_FRAME | 3 | The image frame sequence is smaller than the reference frame third closest to the current frame in the current frame, forward reference |
| GOLDEN_FRAME | 4 | The image frame sequence is smaller than an I frame or GPB frame corresponding to the current frame, similar to a long-term reference frame |
| BWDREF_FRAME | 5 | The image frame sequence is larger than the reference frame closest to the current frame in the current frame, backward reference |
| ALTREF2_FRAME | 6 | The image frame sequence is larger than the reference frame second closest to the current frame in the current frame, backward reference |
| ALTREF_FRAME | 7 | The image frame sequence is larger than the reference frame third closest to the current frame in the current frame, backward reference |

In all embodiments, the combination relationship between the inter prediction modes and the reference frames may be as follows:

For the four single reference frame modes corresponding to the inter prediction type, there are seven reference frames, namely, LAST_FRAME, LAST2_FRAME, LAST3 _FRAME, GOLDEN_FRAME, BWDREF _FRAME, ALTREF2_FRAME and ALTREF _FRAME, and there are 28 (4×7) combinations between the single reference frame modes and the reference frames.

For the eight combined reference frame modes corresponding to the inter prediction type, there are 16 reference frame combinations, namely:
{LAST_FRAME, ALTREF_FRAME};
{LAST2_FRAME, ALTREF_FRAME};
{LAST3_FRAME, ALTREF_FRAME};
{GOLDEN_FRAME, ALTREF_FRAME};
{LAST _FRAME, BWDREF_FRAME};
{LAST2 _FRAME, BWDREF _FRAME};
{LAST3 _FRAME, BWDREF_FRAME;
{GOLDEN_FRAME, BWDREF _FRAME};
{LAST _FRAME, ALTREF2_FRAME};
{LAST2 _FRAME, ALTREF2_FRAME};
{LAST3 _FRAME, ALTREF2_FRAME};
{GOLDEN_FRAME, ALTREF2_FRAME};
{LAST _FRAME, LAST2_FRAME};
{LAST _FRAME, LAST3_FRAME};
{LAST _FRAME, GOLDEN_FRAME};
{BWDREF_FRAME, ALTREF_FRAME}.

Therefore, there are 156 (7×4+16×8) combinations between the inter prediction modes and the reference frames.

In all embodiments, any of the above combinations corresponds to a maximum of three MVPs, and then the current MVP is subjected to four processes: motion estimation (where motion estimation is performed only for modes containing the NEWMV mode), combination mode type optimization, interpolation mode optimization, and motion mode optimization.

A combination mode is used to fuse predicted pixels of two reference frames. For example, an optimal combination mode type may be selected from combination modes, and predicted pixels of two reference frames are fused together based on the selected combination mode type. Each combination mode represents one predicted pixel fusion mode.

In all embodiments, the single reference frame mode and the combined reference frame mode correspond to different motion modes. The single reference frame mode corresponds to four motion modes, namely: SIMPLE (simple motion compensation), OBMC (overlapping block motion compensation), WARPED (global and local warp motion compensation), and SIMPLE(inter_intra). The combined reference frame mode corresponds to the SIMPLE mode.

In the related art, the computational complexity of the inter prediction modes, especially the NEWMV mode, is very large. In the NEWMV mode, for each CU, it is necessary to traverse seven reference frames, traverse a maximum of three MVPs for each reference frame, perform motion estimation for each MVP, and perform interpolation based on nine modes and calculation based on 4 motion modes respectively. In other words, in the NEWMV mode, each CU corresponds to a maximum of 189 (7×3×9) interpolations and 84 (7×3×4) motion mode calculations.

For example, FIG. 4 shows a schematic diagram of a process of selecting an optimal result in the NEWMV mode according to related technologies. As shown in FIG. 4, the process includes the following steps.

Step 401: Set N=0 and acquire a quantity of MVPs.

To be specific, an initial value of N is set to 0, and N represents the N-th MVP, so that each MVP can be traversed. For example, a maximum value of N may be 7×3-1=20. In other words, for a CU, there may be a maximum of 21 MVPs in the NEWMV mode.

Step 402: Determine whether N is less than the quantity of MVPs.

When N is less than the quantity of MVPs, it indicates that the traversal of MVPs for the current CU in the EWMV mode has not been completed.

Step 403: When N is less than the quantity of MVPs, acquire an MVP and set N=N+1.

Setting N=N+1 means that the next MVP will be traversed after the traversal of the current MVP is complete. When N is greater than or equal to the quantity of MVPs, it indicates that the traversal of all the MVPs for the current CU in the EWMV mode have been completed, and traversal of MVPs in the next prediction mode may be performed for the current CU.

Step 404: Motion estimation. To be specific, motion estimation is performed on the current MVP to obtain an optimal motion vector corresponding to the current MVP.

Step 405: Interpolation mode optimization under the optimal motion vector. For example, the optimal interpolation mode corresponding to the optimal motion vector is selected from nine interpolation modes.

Step 406: Motion mode optimization. For example, an optimal motion mode corresponding to the optimal motion vector is selected from four motion modes.

In the above process of selecting the optimal result in the NEWMV mode, it is necessary to perform motion estimation, interpolation based on nine modes and calculation based on four motion modes for each MVP, in order to select the optimal motion vector, the optimal interpolation mode and the optimal motion mode corresponding to the optimal MVP, resulting in high great computational complexity and low coding efficiency.

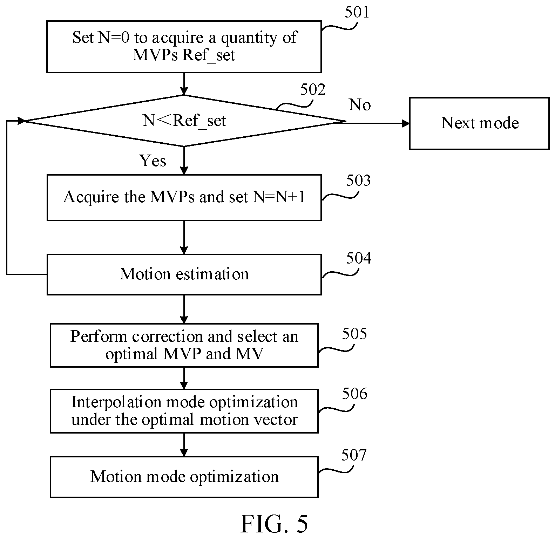

The embodiments of this application provide an inter prediction encoding method, which can improve the encoding efficiency of inter prediction in the NEWMV mode. This method is mainly to select an optimal vector pair including an MV and an MVP based on a correction strategy, and then perform interpolation mode optimization and motion mode optimization only for the optimal vector pair including an MV and an MVP. Compared with FIG. 4 above, FIG. 5 is a schematic diagram of an overall process of an inter prediction encoding method according to an example embodiment of this application. As shown in FIG. 5, the process includes the following steps.

Step 501: Set N=0 and acquire a quantity of MVPs.

To be specific, an initial value of N is set to 0, and N represents the N-th MVP, so that each MVP can be traversed. In the embodiment of this application, it is only necessary to traverse the motion vectors corresponding to each MVP.

Step 502: Determine whether N is less than the quantity of MVPs.

When N is less than the quantity of MVPs, it indicates that the traversal of MVPs for the current CU in the EWMV mode has not been completed.

Step 503: When N is less than the quantity of MVPs, acquire an MVP and set N=N+1.

Setting N=N+1 means that the next MVP will be traversed after the traversal of the current MVP is complete. When N is greater than or equal to the quantity of MVPs, it indicates that the traversal of all the MVPs for the current CU in the EWMV mode have been completed, and traversal of MVPs in the next prediction mode may be performed for the current CU. Assuming that the quantity of MVPs in the EWMV mode is M, i.e., traversal is performed from the zeroth MVP to the (M-1)th MVP, a total of M MVPs are traversed.

Step 504: Motion estimation. To be specific, motion estimation is performed on the current MVP to obtain an optimal MV corresponding to the current MVP (i.e., the candidate MV hereinafter). After the optimal MV corresponding to each MVP is obtained, step 505 is executed.

Step 505: Perform correction and select an optimal vector pair including an MVP and an MV. For example, the optimal vector pair including an MVP and an MV is selected based on each MVP and the optimal MV corresponding to each MVP by using the correction strategy. This process will be described in detail below. For details that are not explained in the embodiment of this application, reference can be made to the following embodiments, and the details will not be repeated here.

Step 506: Interpolation mode optimization under the optimal motion vector. For example, interpolation mode optimization is performed for the optimal vector pair including an MVP and an MV to obtain an optimal interpolation mode.

Step 507: Motion mode optimization. For example, motion mode optimization is performed for the optimal vector pair including an MVP and an MV to obtain an optimal motion mode.

According to FIG. 5, in the inter prediction encoding method according to the embodiment of this application, after motion estimation is performed, the process is cyclically performed, then correction needs to be performed, an optimal vector pair including an MVP and an MV is selected, and finally subsequent interpolation mode optimization and motion mode optimization are performed based on the optimal vector pair including an MVP and an MV. Compared with related technologies, in the NEWMV mode, in the embodiment of this application, it is not necessary to perform interpolation mode traversal and motion mode traversal for all MVPs and motion vectors, thereby reducing the calculation amount of rate-distortion costs and the computational complexity, and further improving the encoding efficiency in the NEWMV mode.

Based on the above description, the inter prediction encoding method according to the embodiments of this application will be described in detail below.

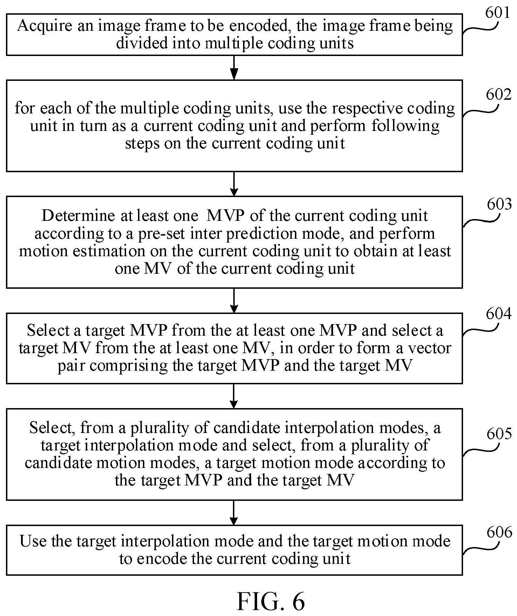

FIG. 6 is a flowchart of an inter prediction encoding method according to an example embodiment of this application. This embodiment is described using an example where the method is applied in an encoder. As shown in FIG. 6, the method includes the following steps.

Step 601: Acquire an image frame to be encoded, the image frame being divided into multiple coding units.

In this embodiment, the image frame is divided into coding units, each of the coding units corresponds to at least two prediction modes, and the at least two prediction modes include a specified inter prediction mode.

In all embodiments, the image frame to be encoded is a non-key frame, i.e., a P frame or a B frame. During acquiring the image frame to be encoded, a to-be-encoded video stream corresponding to the image frame to be encoded is first acquired, and each image frame in the to-be-encoded video stream is sequentially acquired, to determine the current image frame to be encoded.

In all embodiments, each coding unit corresponds to an intra prediction mode and an inter prediction mode. The inter prediction mode includes a NEWMV mode. For example, the NEWMV mode is the specified inter prediction mode provided in the embodiments of this application. Because the NEWMV mode depends on the derivation of MVPs, it is necessary to determine an optimal MVP from at least two (usually three) MVPs in the NEWMV mode.

The specified inter prediction mode in the embodiments of this application may be the NEWMV mode, or may be a combined mode including the NEWMV mode, which is not limited in the embodiments of this application.

Step 602: for each of the multiple coding units, using the respective coding unit in turn as a current coding unit and performing following stepson the current coding unit, such as including Step 603-606.

Step 603: Determine at least one motion vector prediction, MVP, of the current coding unit according to a pre-set inter prediction mode, and perform motion estimation on the current coding unit to obtain at least one motion vector, MV, of the current coding unit.

In all embodiments, the performing motion estimation on the current coding unit to obtain at least one motion vector, MV of the current coding unit comprises: in a case that the at least one MVP comprises n MVPs, for each of the n MVPs, using the respective MVP in turn as a current MVP of the current coding unit and performing following steps, n being positive integer: performing the motion estimation on the current coding unit according to the current MVP to obtain an optimal MV, wherein the at least one MV comprises the optimal MV.

In all embodiments, during the motion estimation traversal on the MVPs, a quantity of MVPs is obtained first; for an i-th MVP, in response to i being not greater than the quantity of the MVPs, motion estimation is performed on the i-th MVP to obtain an i-th candidate motion vector, i being an integer; and n candidate motion vectors are obtained for n MVPs, the i-th MVP being corresponding to the i-th candidate motion vector, and n being the quantity of the MVPs. The i-th candidate motion vector may refer to an optimal motion vector corresponding to the i-th MVP in motion estimation. The specific motion estimation method will be described in detail below, and will not be repeated here.

For example, if the quantity of MVPs is 3, motion estimation is performed on the zeroth MVP, and similarly, motion estimation is performed on the first MVP and the second MVP, to realize the motion estimation traversal for the three MVPs.

In all embodiments, the at least one MVP of the current coding unit in an image frame includes an MV of each of at least one coding unit which is adjacent to the current coding unit in the image frame, wherein the number of above at least one MVP is pre-determined in a pre-set inter prediction mode (or encoding protocol), and above at least one coding unit which is adjacent to the coding unit can be pre-determined in a pre-set inter prediction mode (or encoding protocol).

For example, in above inter prediction mode, the number of above at least one MVP is pre-determined as one or more than one, for example, the number is 3. Also, in above inter prediction mode, the above at least one coding unit is pre-determined to include one coding unit which is adjacent to the current coding unit or a plurality of coding units which are adjacent to the current coding unit, for example, the plurality of coding units which are adjacent to the current coding unit include a coding unit which is on the left side of the current coding unit, a coding unit which is on the upper side of the current coding unit, and a coding unit which is on the left and upper side of the current coding unit.

In all embodiments, an MV of the current coding unit in an image frame is configured to represent position relationship between a coding unit (or called as reference coding unit) in a reference frame and the current coding unit in the image frame (or called as current frame).

In all embodiments, the at least one MV of the current coding unit includes at least one optimal MV, each of the at least one optimal MV being obtained by performing the motion estimation on the current coding unit respectively according to one of the at least one MVP. In all embodiments, the number of the at least one MV is equal to the number of the at least one MVP. For example, in a case that the at least one MVP includes one MVP, the at least one MV includes one MV, wherein the one MV is an optimal MV being obtained by performing the motion estimation on the current coding unit according to the one MVP; also, in a case that the at least one MVP includes k MVPs and k is integer greater than 1, the at least one MV includes k MVs, wherein each of the k MVs is an optimal MV being obtained by performing the motion estimation on the current coding unit according to one of the k MVPs.

In all embodiments, in a case that the at least one MVP comprises n MVPs, for each of the n MVPs, using the respective MVP in turn as a current MVP of the current coding unit and performing following steps, n being positive integer: performing the motion estimation on the current coding unit according to the current MVP to obtain an optimal MV, wherein the at least one MV comprises the optimal MV.

In all embodiments, the step of performing the motion estimation on the current coding unit according to the current MVP to obtain an optimal MV includes: performing the motion estimation on the current coding unit in an image frame by using a reference frame and the current MVP to obtain an optimal MV, the optimal MV being configured to indicate position relationship between an optimal reference coding unit in the reference frame and the current coding unit in the image frame. In all embodiments, if a plurality of MVs are obtained by performing above the motion estimation on the current coding unit, each of the plurality of MVs representing the position relationship between the current coding unit in the image frame and a corresponding one of a plurality of reference coding units in the reference frame (i.e. each MV corresponds to one of the reference coding units), a corresponding cost can be calculated for each of the plurality of MVs according to the current MVP. In particular, the respective cost indicates a computational resource amount required for encoding the current coding unit using a corresponding one of the plurality of MVs. In this manner, the reference coding unit from the reference frame with the minimum cost is determined as the optimal reference coding unit. Consequently, the MV with the minimum cost is determined as the optimal MV from the plurality of MVs.

For example, for the current MVP, in a case that there are P reference coding units in a reference frame, P being integer greater than 1, P MVs are obtained by performing the motion estimation on the current coding unit according to the P reference coding units in the reference frame, and P costs are calculated for the P MVs according to the current MVP, wherein each of the P MVs represents the position relationship between the current coding unit in the image frame and a corresponding one of the P reference coding units in the reference frame, and a corresponding cost can be calculated for each of the P MVs according to the current MVP. the MV with the minimum cost is determined as the optimal MV from P MVs, wherein the cost corresponding to the optimal MV is minimum from the P costs.

In all embodiments, each of the plurality of costs can represent or be the rate-distortion cost corresponding to one of the at least one MV and the current MVP. For example, the rate-distortion cost corresponding to one of the at least one MV and the current MVP can be calculated by following formula: $rd cos t = dist + rate \times λ$ where the *rdcost* represents the rate-distortion cost ,the *rate* represents the number of bits which are used to encode the difference between the one of the at least one MV and the current MVP, the *dist* represents the distortion of the one of the at least one MV, λ is a preset constant.

In all embodiments, the distortion of the one of the at least one MV can represent a difference between the pixels of current coding unit of current frame and the pixels of a reference coding unit of a reference frame. In all embodiments, above difference can be the difference of the pixel value. For example, the distortion of the one of the at least one MV can be calculated by SATD (Sum of Absolute Transformed Difference) algorithm, or SSE (Sum of Square Error) algorithm.

In all embodiments, after the candidate motion vectors corresponding to the N MVPs are obtained, the candidate motion vectors are stored. Optionally, the candidate motion vectors are stored; or, the candidate motion vectors and distortions of the candidate motion vectors are stored.

In this embodiment, taking the storage of the candidate motion vectors and the distortions of the candidate motion vectors as an example, the storage may be performed in at least one of the following manners.

First, a first array and a second array are constructed, where the first array and the second array are respectively used to store the distortion of the candidate motion vector and the candidate motion vector. In all embodiments, the method further comprises: constructing a first array and a second array, wherein the first array is configured to store a distortion of each of the at least one MV, and the second array is configured to store the at least one MV each corresponding to an MVP of the at least one MVP; after obtaining each of at least one MV, storing a distortion of the each of the at least one MV into the first array, and storing the each of the at least one MV into the second array.

Second, a database is constructed, and the candidate motion vector and the distortion of the candidate motion vector are stored in the form of a key-value pair.

In the embodiments of this application, the construction of the first array and the second array to store the candidate motion vectors and the distortions of the candidate motion vectors is used as an example for description. The first array is used to store the distortion of the candidate motion vector corresponding to the MVP, and the second array is used to store the candidate motion vector corresponding to the MVP. After motion estimation is performed on the i-th MVP to obtain the i-th candidate motion vector, the distortion corresponding to the i-th candidate motion vector is stored in the first array, and the i-th candidate motion vector is stored in the second array.

In all embodiments, the candidate motion vectors include the optimal motion vectors obtained by performing motion estimation on the MVPs.

For example, when the motion estimation traversal is performed on the MVPs in the specified inter prediction mode, the following processes may be mainly included.

### 1. Acquire a quantity of MVPs.

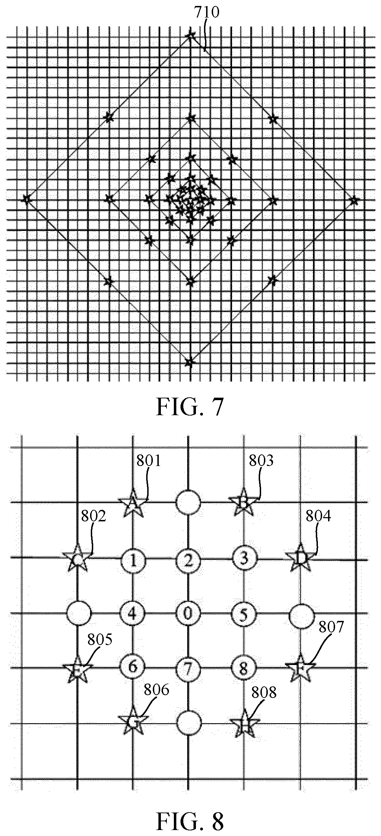

In all embodiments, the quantity of MVPs in the NEWMV mode is 3, that is, the zeroth to second MVPs shown in FIG. 7 above.

### 2. Set arrays for storing data corresponding to each MVP.

The set arrays include a first array and a second array, respectively as follows.

First array: dist_bestmv_list[i], for storing the distortion of the optimal motion vector corresponding to each MVP.

Second array: me_bestmv_list[i], for storing the optimal motion vector corresponding to each MVP. Herein, i is used for representing the i-th MVP, and the value of i is 0, 1, or 2.

### 3. Perform motion estimation on each MVP in sequence.

Manners of motion estimation may include integer-pixel motion estimation and sub-pixel motion estimation. Integer pixel motion estimation may include a TZ search method (to be introduced below), NStep search method, diamond search method (to be introduced below), hexagon search method, etc. Sub-pixel motion estimation may include diamond search, full search, etc.

4. After the optimal motion vector corresponding to each MVP is obtained, the distortion and optimal motion vector corresponding to the current MVP index can be obtained. The distortion and optimal motion vector corresponding to the current MVP index are recorded in the arrays respectively.

For example, mvp_index is used to represent the current MVP index, and the value of mvp_index is [0, 2], then dist_bestmv_list[mvp_index] = dist; me_bestmv_list [mvp_index] = bestmv.

Herein, dist represents the distortion and bestmv represents the optimal motion vector. To be specific, the distortion corresponding to the MVP index is stored under the MVP index of the first array, and the optimal motion vector under the MVP index is stored under the MVP index of the second array. For example, the distortion corresponding to the zeroth MVP is stored under the index of the zeroth MVP in the first array, which is dist_bestmv_list[0], and the optimal motion vector corresponding to the zeroth MVP is stored under the index of the zeroth MVP in the second array, which is me_bestmv_list [0].

Step 604: Selecta target MVP from the at least one MVP and select a target MV from the at least one MV, in order to form a vector pair comprising the target MVP and the target MV.

In all embodiments, in a case that the at least one MVP includes n MVPs and the at least one MV includes n MVs, n being positive integer, m vector pairs can be determined, wherein m is n×n and each of the m vector pairs includes one of the at least one MVP and one of the at least one MV. For each of the n MVPs, the respective MVP is used in turn as a current MVP and following steps are performed: respectively combining the current MVP with each of the n MVs to form n vector pairs. For example, in a case the at least one MVPincludes3 MVPs (MVP0, MVP1, MVP2) and the at least one MV includes3 MVs (MV0, MV1, MV2), 9 vector pairs are determined, wherein the 9 vector pairs include (MVP0, MV0), (MVP0, MV1), (MVP0, MV2), (MVP1, MV0), (MVP1, MV1), (MVP1, MV2), (MVP2, MV0), (MVP2, MV1), (MVP2, MV2).

In all embodiments, in a case that the m vector pairs can be determined, m rate-distortion costs are determined, wherein each of the m rate-distortion costs corresponding to one of the m vector pairs respectively. For example, in a case that 9 vector pairs are determined, 9 rate-distortion costs are determined. In all embodiments, the rate-distortion cost corresponding to one of the m vector pairs which includes one MVP and one MV can be determined according to the one MVP, the one MV and the distortion of the one MV. For example, the rate-distortion cost corresponding to one of the m vector pairs which includes one MVP and one MV can be determined according to the distortion of the one MV and the difference between the one MV and the one MVP (such as, cost₀₀, cost₀₁...cost₂₂, as described below).

In all embodiments, in a case that m rate-distortion costs are determined, a vector pair, corresponding to which the rate-distortion cost is minimum, is selected from the m vector pairs, wherein the selected vector pair includes a target MVP and a target MV, the target MVP being selected from the at least one MVP, the target MV being selected from the at least one MV.

The selected vector pair includes a target MVP determined from the MVPs and a target motion vector determined from the candidate motion vectors.

In all embodiments, the target MVP is the optimal MVP and the target motion vector is the optimal motion vector.

In all embodiments, the target MVP and the target motion vector forms a corresponding vector pair, i.e., when the target MVP is the i-th MVP, the target motion vector is the i-th motion vector. In this case, the optimal vector pair can be determined directly according to the rate-distortion cost corresponding to each candidate vector pair. For example, a first rate-distortion cost of the zeroth MVP and the zeroth motion vector, a second rate-distortion cost of the first MVP and the first motion vector, and a third rate-distortion cost of the second MVP and the second motion vector are determined. According to the first rate-distortion cost, the second rate-distortion cost and the third rate-distortion cost, the vector pair with the minimum rate-distortion cost is determined. For example, when the first rate-distortion cost is the minimum, the zeroth MVP and the zeroth motion vector corresponding to the first rate-distortion cost are determined as the optimal vector pair.

In the above embodiments, the determination of the optimal vector pair with the minimum rate-distortion cost is used as an example for description. In all embodiments, two vector pairs with the minimum rate-distortion cost may be determined, and subsequent interpolation traversal and motion mode traversal are respectively performed on the MVPs and motion vectors corresponding to the two vector pairs with the minimum rate-distortion cost. This is not limited in the embodiments of this application. Optionally, the quantity of vector pairs can be determined by an external interface.

In some other embodiments, the target MVP and the target motion vector form a vector pair obtained through recombination, i.e., when the target MVP is the i-th MVP, the target motion vector may be the i-th motion vector or a motion vector determined by other MVPs. In the embodiments of this application, the target MVP and the target motion vector forming a vector pair obtained through recombination is used as an example for description.

For example, each MVP and each candidate motion vector are recombined in sequence, and an optimal vector pair is determined from the obtained vector pairs. The quantity of vector pairs obtained by recombining each MVP and each candidate motion vector is the product of the quantity of MVPs and the quantity of candidate motion vectors.

The above recombination manner of MVPs and motion vectors is only an example, and the specific recombination mode of MVPs and motion vectors is not limited in the embodiments of this application.

Among the MVPs and the corresponding candidate motion vectors obtained in the above step 602, there may be a local optimal value for the matching between the MVPs and the candidate motion vectors. Therefore, in the embodiments of this application, the vector pair can be determined by correction (i.e., recombination) to eliminate the influence of the local optimal value, to improve the accuracy of obtaining the target MVP and the target motion vector and improve the quality of the vector pair, thereby improving the encoding quality in the specified inter prediction mode.

Optionally, correction may be made by recombining all MVPs and all candidate motion vectors.

For example, motion estimation is performed on the zeroth MVP to obtain a zeroth candidate motion vector (i.e., the optimal motion vector of the zeroth MVP); motion estimation is performed on the first MVP to obtain a first candidate motion vector (i.e., the optimal motion vector of the first MVP); motion estimation is performed on the second MVP to obtain a second candidate motion vector (i.e., the optimal motion vector of the second MVP). Then the three MVPs and three candidate motion vectors are recombined in sequence, to obtain a vector pair including the zeroth MVP and the zeroth candidate motion vector, a vector pair including the zeroth MVP and the first candidate motion vector, a vector pair including the zeroth MVP and the second candidate motion vector, a vector pair including the first MVP and the zeroth candidate motion vector, a vector pair including the first MVP and the first candidate motion vector, a vector pair including the first MVP and the second candidate motion vector, a vector pair including the second MVP and the zeroth candidate motion vector, a vector pair including the second MVP and the first candidate motion vector, a vector pair including the second MVP and the second candidate motion vector. For example, the vector pair with the minimum rate-distortion cost, is determined from these vector pairs.

In all embodiments, the vector pair with the minimum rate-distortion cost is determined from these vector pairs; or, from these vector pairs, a plurality of vector pairs with the minimum rate-distortion cost are determined, and interpolation mode traversal and motion mode traversal are respectively performed according to the target MVPs and the target motion vectors respectively corresponding to the plurality of optimal vector pairs. The quantity of optimal vector pairs can be determined by an external interface.

Step 605: Select, from a plurality of candidate interpolation modes, a target interpolation mode and select, from a plurality of candidate motion modes, a target motion mode according to the target MVP and the target MV.

In all embodiments, after the optimal vector pair is determined, interpolation mode optimization and motion mode optimization may be performed according to the target MVP (for example, the optimal MVP) and the target motion vector (for example, the optimal motion vector) in the optimal vector pair.

In all embodiments, in the process of interpolation calculation, horizontal interpolation is performed first, and then vertical interpolation is performed. In an exemplary standard (such as AV1 standard), three interpolation methods are designed for sub-pixels: REG (interpolation based on regular expressions), SMOOTH (smooth interpolation) and SHARP. The horizontal and vertical interpolations can be arbitrarily combined, to obtain nine interpolation modes, namely, REG_REG, REG_SMOOTH, REG_SHARP, SMOOTH_REG, SMOOTH_SMOOTH, SMOOTH_SHARP, SHARP _REG. SHARP_SMOOTH and SHARP_SHARP, wherein the candidate interpolation modes include above nine interpolation modes.

In all embodiments, the step of selecting, from a plurality of candidate interpolation modes, a target interpolation mode according to the target MVP and the target MV, includes: estimating a rate-distortion cost of each of the plurality of candidate interpolation modes according to the target MVP and the target MV, and selecting a target interpolation mode, with the minimum rate-distortion cost, from the plurality of candidate interpolation modes.

For example, the rate-distortion cost of each of above nine interpolation modes is estimated according to the target MVP and the target MV, and an interpolation mode with the minimum rate-distortion cost is an optimal interpolation mode, i.e. the target interpolation mode, from the nine interpolation modes.

In all embodiments, the plurality of candidate motion modes include the following four types: SIMPLE,OBMC,WARPED and SIMPLE(inter_intra).

In all embodiments, the candidate motion mode can represent a manner for determining a value of each of pixels in the current coding unit. For example, in a case that the candidate motion mode is SIMPLE mode, the value of each of pixels in the current coding unit is a predicted value obtained after interpolation.

In all embodiments, the step of selecting, from a plurality of candidate motion modes, a target motion mode according to the target MVP and the target MV includes: estimating a rate-distortion cost of each of the plurality of candidate motion modes according to the target MVP and the target MV, and selecting a target motion mode, with the minimum rate-distortion cost, from the plurality of candidate motion modes.

For example, the rate-distortion cost of each of above four motion modes is estimated according to the target MVP and the target MV, and a motion mode with the minimum rate-distortion cost is an optimal motion mode, i.e. the target motion mode, from the four motion modes.

Step 606: Use the target interpolation mode and the target motion mode to encode the current coding unit.

In all embodiments, the step of using the target interpolation mode and the target motion mode to encode the current coding unit includes: encoding the current coding unit based on the target MVP, the target interpolation mode, the target motion mode, the reference frame and the number of bits. In all embodiments, above number of bits is the number of bits which are used to encode MVD which is a difference between the target MV and the target MVP, that is, MVD=the target MV-the target MVP.

In all embodiments, the step of determining a reference frame corresponding to the target MVP comprises: determining a reference frame indexing mode corresponding to the target MVP; obtaining the reference frame by using a reference frame indexing mode and the target MVP as an index.

In all embodiments, the step of determining a number of bits corresponding to the target MVP comprises: determining the number of bits which are used to encode a difference between the target MV and the target MVP.

To sum up, according to the inter prediction encoding method provided in the embodiment of this application, in a scenario of encoding an image frame using a specified inter prediction mode (for example, NEWMV mode), a vector pair including a target MVP and a target motion vector (for example, an optimal vector pair) is determined first, and then an optimal interpolation mode and an optimal motion mode are determined for this vector pair, i.e., it is not necessary to perform interpolation mode traversal and motion mode traversal for all MVPs and motion vectors, thereby reducing the calculation amount of rate-distortion costs and the computational complexity, and further improving the encoding efficiency in the specified inter prediction mode.

In addition, the optimal vector pair is determined by correction (i.e., recombination) to eliminate the influence of the local optimal value between MVPs and candidate motion vectors, to improve the accuracy of obtaining the target MVP and the target motion vector and improve the quality of the vector pair, thereby improving the encoding quality in the specified inter prediction mode.

In all embodiments, the above motion estimation methods are introduced by using the TZ search method and diamond search method as representatives.

The implementation of the TZ search method includes the following processes.

### (1) Determine a search starting point.

The current MVP is used as a search starting point. Rate-distortion costs of motion vectors corresponding to the current MVP and a position (0, 0) are compared, and the motion vector with the smaller rate-distortion cost is used as a final search starting point.

### (2) Search within a search window range based a step size of 1.

For example, refer to FIG. 7, which shows a schematic diagram of a TZ search template according to an example embodiment of this application. As shown in FIG. 7, the TZ search method includes a diamond template 710, and a search is performed within the search window range of the diamond template 710. The step size is increased by an integer power of 2, and the point with the minimum rate-distortion cost is selected as a search result (the optimal motion vector is determined based on the search result).

(3) If the step size corresponding to the point with the minimum rate-distortion cost is 1, start a 2-point search. For example, FIG. 8 shows a schematic diagram of a 2-point search according to an example embodiment of this application. As shown in FIG. 8, point 801 and point 802 are added at point 1, point 803 and point 804 are added at point 3, point 805 and point 806 are added at point 6, and point 807 and point 808 are added at point 8. For other positions, such as point 2, point 4, point 5 and point 7, position points above, below, on the left of, and on right of these positions have been calculated, so no point needs to be added.

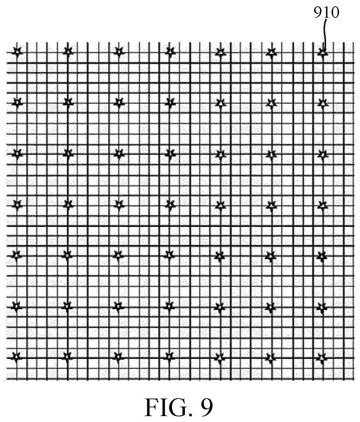

(4) If the step size corresponding to the point with the minimum rate-distortion cost obtained in step (3) is greater than 5, all points on every other 5 rows and 5 columns are scanned by raster scanning. For example, refer to FIG. 9, which shows a partial schematic diagram of each searching for position points in a raster scanning manner. As shown in FIG. 9, marked points 910 on every other 5 rows and 5 columns are scanned to obtain the search result.

The implementation of the diamond search method includes the following processes.

The diamond search method has two different matching templates: large diamond and small diamond. The large diamond matching template has 9 search points and the small diamond matching template has 5 search points. First, the large diamond matching template with a large step size is used for coarse search, and then the small diamond matching template is used for fine search. The search steps can be as follows.

I. By taking a central point of the search window as the center, rate-distortion costs of the central point and eight points around the central point (a total of nine points) are calculated according to the large diamond matching template, and compared to obtain the point with the minimum rate-distortion cost.

II. If the central point of the search window is the point with the minimum rate-distortion cost, step III is performed to apply the small diamond search template; otherwise, the process goes back to step I.

III. By using the small diamond matching template having only five search points, rate-distortion costs of the five points are calculated, and the point with the minimum rate-distortion cost is determined as an optimal matching point, i.e., the optimal motion vector.

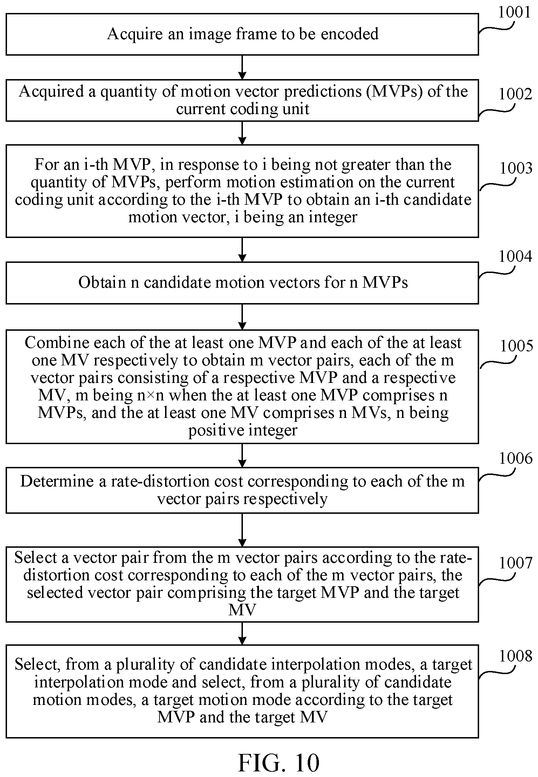

In all embodiments, the above-mentioned MVP and motion vector correction method is realized by recombining MVP and candidate motion vectors. FIG. 10 is a flowchart of an inter prediction encoding method according to another example embodiment of this application. This embodiment is described using an example where the method is applied in an encoder. As shown in FIG. 10, the method includes the following steps.

Step 1001: Acquire an image frame to be encoded.

The image frame is divided into coding units, each of the coding units corresponds to at least two prediction modes, and the at least two prediction modes include a specified inter prediction mode.

For each of the multiple coding units, using the respective coding unit in turn as a current coding unit, the following steps(such as includingStep1002-1008) on the current coding unit are performed.

Step 1002: Acquired a quantity of motion vector predictions (MVPs) of the current coding unit.

Step 1003: For an i-th MVP, in response to i being not greater than the quantity of MVPs, perform motion estimation on the current coding unit according to the i-th MVP to obtain an i-th candidate motion vector, i being an integer.

For example, assuming that the quantity of MVPs is 3, motion estimation is performed for the zeroth MVP because the zeroth MVP is not greater than the quantity of MVPs. Similarly, motion estimation is performed for the first MVP and the second MVP.

Step 1004: Obtain n candidate motion vectors (or called as n MVs, or at least one MV) for n MVPs(or called as at least one MVP).

The i-th MVP corresponds to the i-th candidate motion vector, n being the quantity of MVPs.

For example, motion estimation is performed on the zeroth MVP to obtain a zeroth candidate motion vector (i.e., the optimal motion vector of the zeroth MVP); motion estimation is performed on the first MVP to obtain a first candidate motion vector (i.e., the optimal motion vector of the first MVP); and motion estimation is performed on the second MVP to obtain a second candidate motion vector (i.e., the optimal motion vector of the second MVP).

Step 1005: Combine each of the at least one MVP and each of the at least one MV respectively to obtain m vector pairs, each of the m vector pairs consisting of a respective MVP and a respective MV, m being n×n when the at least one MVP comprises n MVPs, and the at least one MV comprises n MVs, n being positive integer.

For example, the above MVPs and candidate motion vectors (or called as MVs)are recombined to obtain a vector pair including the zeroth MVP and the zeroth candidate motion vector, a vector pair including the zeroth MVP and the first candidate motion vector, a vector pair including the zeroth MVP and the second candidate motion vector, a vector pair including the first MVP and the zeroth candidate motion vector, a vector pair including the first MVP and the first candidate motion vector, a vector pair including the first MVP and the second candidate motion vector, a vector pair including the second MVP and the zeroth candidate motion vector, a vector pair including the second MVP and the first candidate motion vector, a vector pair including the second MVP and the second candidate motion vector. For example, the vector pair with the minimum rate-distortion cost, is determined from these vector pairs.

Step 1006: Determine a rate-distortion cost corresponding to each of the m vector pairs respectively.

In all embodiments, the rate-distortion cost is used to represent a pixel error status under a vector pair. In all embodiments, the rate-distortion cost is used to represent a pixel coding cost under a corresponding one of the m vector pairs, and the rate-distortion cost of the corresponding one of the m vector pairs is determined by the distortion of the MV in the corresponding one of the m vector pairs, and the number of bits which are used to encode the difference between the MV and the MVP in the corresponding one of the m vector pairs.

For example, in a case that the at least one MVP comprises n MVPs and the at least one MV comprises n MVs, m vector pairs are obtained by combining each of the at least one MVP and each of the at least one MV respectively, m being n×n and n being positive integer. The rate-distortion cost of each of m vector pairs is calculated based on the following formula 1. $cos {t}_{ij} = dist_bestmv_list \left[j\right] + mvcost \left(me_bestmv_list\left[j\right]-mvp\left[i\right]\right)$

wherein i is used to indicate the i-th MVP of the n MVPs and j is used to indicate the j-th MV of the n MVs, the cos*tᵢⱼ* represents the rate-distortion cost of a vector pair including the i-th MVP and the j-th MV, i and j are integer, 1≤i≤nand1≤j≤n, or 0≤i≤n-1 and 0≤j≤n-1. The mvp[i] represents the i-th MVP of the n MVPs, and mvcost(me_beatmv_list[j]-mvp[i]) represents the number of bits which are used to encode the difference between the j-th MV and the i-th MVP, dist_bestmv_list[j] represents the distortion of the j-th MV, me_bestmv_list[j] represents the j-th MV.

For example, if the value of m is [0, 2], i.e., there are three MVPs, the rate-distortion costs corresponding to nine vector pairs may be obtained, which are expressed by the following formulas respectively. $cos {t}_{00} = dist_bestmv_list \left[0\right] + mvcost \left(me_bestmv_list\left[0\right]-mvp\left[0\right]\right)$ $cos {t}_{01} = dist_bestmv_list \left[1\right] + mvcost \left(me_bestmv_list\left[1\right]-mvp\left[0\right]\right)$ $cos {t}_{02} = dist_bestmv_list \left[2\right] + mvcost \left(me_bestmv_list\left[2\right]-mvp\left[0\right]\right)$ $cos {t}_{10} = dist_bestmv_list \left[0\right] + mvcost \left(me_bestmv_list\left[0\right]-mvp\left[1\right]\right)$ $cos {t}_{11} = dist_bestmv_list \left[1\right] + mvcost \left(me_bestmv_list\left[1\right]-mvp\left[1\right]\right)$ $cos {t}_{12} = dist_bestmv_list \left[2\right] + mvcost \left(me_bestmv_list\left[2\right]-mvp\left[1\right]\right)$ $cos {t}_{20} = dist_bestmv_list \left[0\right] + mvcost \left(me_bestmv_list\left[0\right]-mvp\left[2\right]\right)$ $cos {t}_{21} = dist_bestmv_list \left[1\right] + mvcost \left(me_bestmv_list\left[1\right]-mvp\left[2\right]\right)$ $cos {t}_{22} = dist_bestmv_list \left[2\right] + mvcost \left(me_bestmv_list\left[2\right]-mvp\left[2\right]\right)$

cost₀₀ represents the rate-distortion cost of the vector pair including the zeroth MVP and the zeroth candidate motion vector; cost₀₁ represents the rate-distortion cost of the vector pair including the zeroth MVP and the first candidate motion vector; cost₀₂ represents the rate-distortion cost of the vector pair including the zeroth MVP and the second candidate motion vector; and so on.

Step 1007: Select a vector pair from the m vector pairs according to the rate-distortion cost corresponding to each of the m vector pairs, the selected vector pair comprising the target MVP and the target MV.

In all embodiments, a vector pair corresponding to which the rate-distortion cost is minimum is selected from the m vector pairs, wherein the selected vector pair includes the target MVP and the target MV.

For example, take the above nine vector pairs as an example, if cost₂₀ is the minimum, the optimal mvp index is 2 and the optimal motion vector index is 0, that is, the second MVP and the zeroth candidate motion vector constitute a vector pair, where the second MVP is the target MVP and the zeroth candidate motion vector is the target motion vector.

Step 1008: Select, from a plurality of candidate interpolation modes, a target interpolation mode and select, from a plurality of candidate motion modes, a target motion mode according to the target MVP and the target MV.

In all embodiments, after the optimal vector pair is determined, interpolation mode optimization and motion mode optimization are performed according to the target MVP (for example, the optimal MVP) and the target motion vector (for example, the optimal motion vector) in the optimal vector pair.

In all embodiments, after the target interpolation mode and the target motion mode are selected, the target interpolation mode and the target motion mode are used to encode the current coding unit.

In all embodiments, the step of using the target interpolation mode and the target motion mode to encode the current coding unit includes: encoding the current coding unit based on the target MVP, the target interpolation mode, the target motion mode, the reference frame and the number of bits. In all embodiments, above number of bits is the number of bits which are used to encode MVD which is a difference between the target MV and the target MVP, that is, MVD=the target MV-the target MVP.

To sum up, according to the inter prediction encoding method provided in the embodiment of this application, in a scenario of encoding an image frame using a specified inter prediction mode (for example, NEWMV mode), a vector pair including a target MVP and a target motion vector (for example, an optimal vector pair) is determined first, and then an optimal interpolation mode and an optimal motion mode are determined for this vector pair, i.e., it is not necessary to perform interpolation mode traversal and motion mode traversal for all MVPs and motion vectors, thereby reducing the calculation amount of rate-distortion costs and the computational complexity, and further improving the encoding efficiency in the specified inter prediction mode.

In addition, according to the method provided in this embodiment, the MVPs and the optimal motion vectors corresponding to the MVPs are corrected by recombining the MVPs and the candidate motion vectors, to avoid the situation where there is a local optimal value between the MVPs and the optimal motion vectors corresponding to the MVPs, and improve the accuracy of determining the target MVP and the target motion vector, thereby further improving the encoding quality.

In addition, the method provided in this embodiment can reduce 2/3 of the computation amount of interpolation traversal and motion mode calculation in the NEWMV mode.

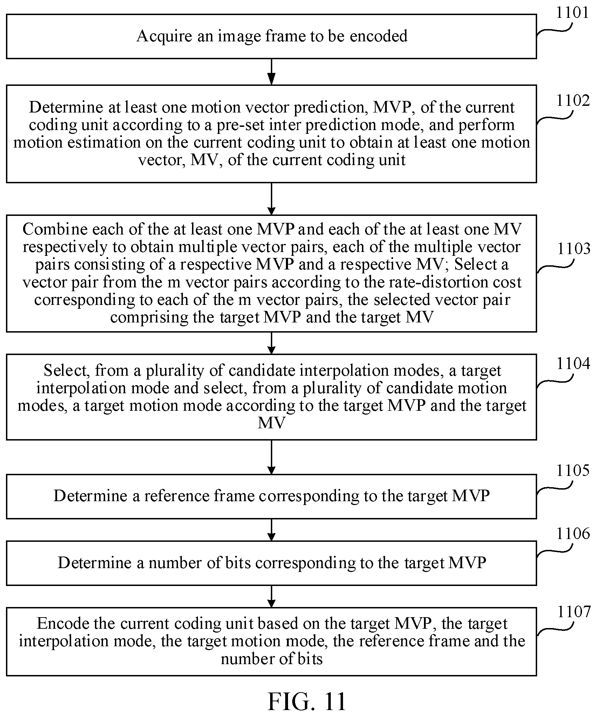

In all embodiments, after the optimal vector pair is determined, the reference frame, the number of bits consumed by the index and so on also need to be determined. FIG. 11 is a flowchart of an inter prediction encoding method according to another example embodiment of this application. This embodiment is described using an example where the method is applied in an encoder. As shown in FIG. 11, the method includes the following steps.

Step 1101: Acquire an image frame to be encoded.

The image frame is divided into coding units, each of the coding units corresponds to at least two prediction modes, and the at least two prediction modes include a specified inter prediction mode.

For each of the multiple coding units, using the respective coding unit in turn as a current coding unit, the following steps(such as including Step 1102-1107) on the current coding unit are performed.

Step 1102: Determine at least one motion vector prediction, MVP, of the current coding unit according to a pre-set inter prediction mode, and perform motion estimation on the current coding unit to obtain at least one motion vector, MV, of the current coding unit.

In all embodiments, during the motion estimation traversal on the MVPs, a quantity of MVPs is obtained first; for an i-th MVP, in response to i being not greater than the quantity of the MVPs, motion estimation is performed on the current coding unit according to the i-th MVP to obtain an i-th candidate motion vector (or called as i-th MV), i being an integer; and n candidate motion vectors are obtained for n MVPs, the i-th MVP being corresponding to the i-th candidate motion vector, and n being the quantity of the MVPs.

Step 1103: Combine each of the at least one MVP and each of the at least one MV respectively to obtain multiple vector pairs, each of the multiple vector pairs consisting of a respective MVP and a respective MV; Select a vector pair from the m vector pairs according to the rate-distortion cost corresponding to each of the m vector pairs, the selected vector pair comprising the target MVP and the target MV. In all embodiments, each of the at least one MVP and each of the at least one MV respectively are combined to obtain m vector pairs, each of the m vector pairs consisting of a respective MVP and a respective MV, m being n×n when the at least one MVP comprises n MVPs, and the at least one MV comprises n MVs, n being positive integer.

The selected vector pair includes the target MVP determined from the MVPs and the target motion vector determined from the candidate motion vectors.

In all embodiments, the target MVP is the optimal MVP and the target motion vector is the optimal motion vector.

Among the MVPs and the corresponding candidate motion vectors obtained in the above step 1102, there may be a local optimal value for the matching between the MVPs and the candidate motion vectors. Therefore, in the embodiments of this application, the MVPs and the candidate motion vectors can be corrected by recombination to obtain the target MVP and the target motion vector.

Step 1104: Select, from a plurality of candidate interpolation modes, a target interpolation mode and select, from a plurality of candidate motion modes, a target motion mode according to the target MVP and the target MV.

In all embodiments, after the optimal vector pair is determined, interpolation mode optimization and motion mode optimization are performed according to the target MVP (for example, the optimal MVP) and the target motion vector (for example, the optimal motion vector) in the optimal vector pair.

In all embodiments, the interpolation mode optimization and motion mode optimization are introduced.

The interpolation mode optimization includes the following processes.

Interpolation is a process to increase the sampling rate. The reason for interpolation is that if the optimal motion vector contains sub-pixels, a predicted pixel cannot be directly obtained, so it is necessary to first obtain a reference pixel corresponding to the integer pixel position of the optimal motion vector, and then perform interpolation according to sub-pixel coordinates, to finally obtain the predicted pixel.

In the process of interpolation calculation, horizontal interpolation is performed first, and then vertical interpolation is performed. In AV1, three interpolation methods are designed for sub-pixels: REG (interpolation based on regular expressions), SMOOTH (smooth interpolation) and SHARP. All the filter kernels have 8 taps, and the difference between the three interpolation methods mainly lies in the coefficients of the filtering kernels.

The horizontal and vertical interpolations can be arbitrarily combined, to obtain nine interpolation modes, namely, REG_REG, REG_SMOOTH, REG_SHARP, SMOOTH_REG, SMOOTH_SMOOTH, SMOOTH_SHARP, SHARP _REG. SHARP_SMOOTH and SHARP_SHARP.

The nine interpolation modes are traversed, rate-distortion costs of the interpolation modes are estimated, and the interpolation mode with the minimum rate-distortion cost is the optimal interpolation mode.

The implementation of the motion mode optimization includes the following processes.

Motion modes mainly include the following four types: IMPLE,OBMC,WARPED and SIMPLE(inter_intra).

The optimal motion mode is written into a bit stream to inform the decoder of a motion mode to be used to recover reconstruction data during decoding. SIMPLE(inter_intra) and SIMPLE are both SIMPLE modes, but they are quite different. During decoding, the SIMPLE mode and the SIMPLE(inter_intra) mode may be distinguished based on reference frame information in syntax. In this way, as the same tag is used, one bit can be saved.

Rate-distortion cost of all the four motion modes need to be estimated, i.e., all the four motion modes need to be subjected to the entire reconstruction process including transformation, quantization, inverse quantization and inverse transformation. For the four motion modes, different methods are used to obtain the predicted pixel.

First step: Obtain the predicted pixel.

For the SIMPLE mode, the predicted pixel is a predicted value obtained after interpolation.

For the OBMC mode, the predicted pixel obtained after interpolation is reprocessed. According to MVs of adjacent blocks, predicted pixels of the adjacent blocks are obtained. Then the predicted pixels of the adjacent blocks are fused with the predicted value of the current block obtained after interpolation according to a certain rule to obtain a new predicted value.

For the WARPED mode, with reference to three available positions on the left, the top and the upper right corner, an affine transformation MV is constructed, then a small-range motion search is performed, and finally interpolation is performed to obtain the predicted pixel.

For the SIMPLE(inter_intra) mode, the predicted pixel obtained after interpolation is reprocessed. First, intra prediction of DC, V, H and Smooth modes is performed to obtain an optimal intra predicted pixel, and then the intra predicted and inter predicted pixels are fused to obtain a new predicted value.

Second step: Complete rate-distortion calculation.

First, a residual pixel is obtained according to an input pixel and a predicted pixel.

Then, the number of bits other than the residual coefficient is acquired in a certain motion mode.

The acquisition of the number of bits is related to the context of entropy coding. The number of bits "rate" in the rate-distortion cost formula contains a lot of information, e.g., a number of bits consumed by the reference frame, a number of bits consumed by the MVP index, a number of bits consumed by the MVD, a number of bits consumed by the interpolation mode, a number of bits consumed by the motion mode, a number of bits consumed by the residual, and so on. Herein, the number of bits is the total number of bits consumed by a certain motion mode except transformation. The number of bits varies with different motion modes.

Then, calculation is performed on residual data by SSE.

It is necessary to transform, quantize, inverse quantize and inverse transform the residual data to obtain a reconstructed pixel. During the transformation, the number of bits in the above step 2, a number of bits consumed by the transformation type, a number of bits consumed by the transformation unit division type, and a number of bits consumed by the residual coefficient, are needed to evaluate an optimal transformation type and optimal TU partitioning type of the current prediction block. Then a distortion and a number of bits corresponding to the optimal transformation type and optimal TU partitioning type are obtained, which are defined as dist and rate respectively.

Finally, the rate-distortion cost rdcost is obtained, and the motion mode corresponding to the minimum rate-distortion cost is the optimal motion mode.

Herein, *rd*cos*t* = *dist* + *rate* × *λ,* where λ is a preset constant.

The calculation of the distortion is explained above by taking SSE as an example. In the embodiments of this application, the calculation may also be realized by SATD, SAD, etc., which is not limited in the embodiments of this application.

Step 1105: Determine a reference frame corresponding to the target MVP.

In all embodiments, a reference frame indexing mode corresponding to the target MVP is determined, and the reference frame is obtained based on the reference frame indexing mode and the index of the target MVP. Refer to Table 1 above for the reference frame indexing mode.

Step 1106: Determine a number of bits corresponding to the target MVP.

Optionally, the number of bits which are used to encode the difference between the target MV and the target MVP is determined as the number of bits corresponding to the target MVP. That is, mvd = best_mv - best_mvp, where best_mv represents the optimal motion vector (i.e., the target motion vector in the embodiments of this application) and best_mvp represents the optimal MVP (i.e., the target MVP in the embodiments of this application).

Step 1107: Encode the current coding unit based on the target MVP, the target interpolation mode, the target motion mode, the reference frame and the number of bits.

To sum up, according to the inter prediction encoding method provided in the embodiment of this application, in a scenario of encoding an image frame using a specified inter prediction mode (for example, NEWMV mode), a vector pair including a target MVP and a target motion vector (for example, an optimal vector pair) is determined first, and then an optimal interpolation mode and an optimal motion mode are determined for this vector pair, i.e., it is not necessary to perform interpolation mode traversal and motion mode traversal for all MVPs and motion vectors, thereby reducing the calculation amount of rate-distortion costs and the computational complexity, and further improving the encoding efficiency in the specified inter prediction mode.

In addition, according to the method provided in this embodiment, the target MVP and the corresponding target motion vector are selected in advance through MVP correction, and then interpolation mode traversal and motion mode traversal are performed. This can save at most 2/3 of the calculation amount of interpolation mode traversal and motion mode traversal, achieving a high speedup, and providing a basis for the inter prediction framework of the single reference frame NEWMV mode, which is the core part of an AV1 encoder.

Test result: For encoding of 65 frames, the speed is increased by 6%, and a speedup greater than 50:1 is achieved.

In the above embodiments, the application of the inter prediction encoding method to the AV1 compression protocol is taken as an example, and the inter prediction encoding method provided in the embodiments of this application can also be applied to other compression protocols, such as H.266 compression protocol, AVS3 compression protocol, etc.

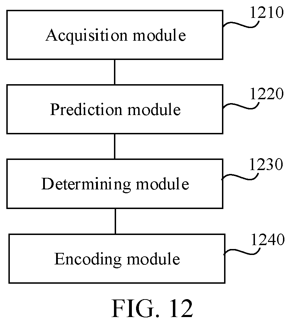

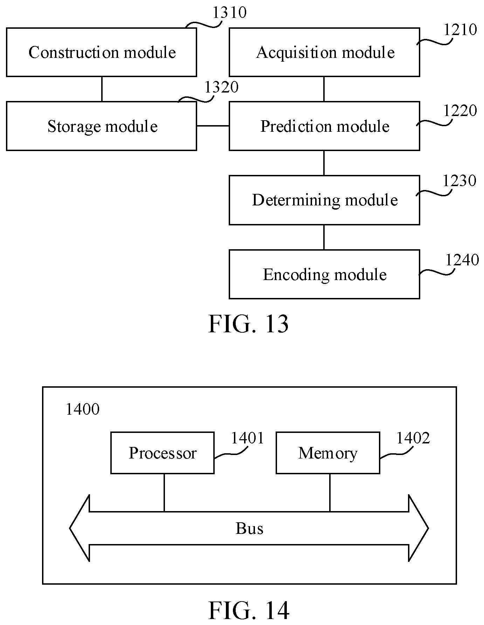

FIG. 12 is a structural block diagram of an inter prediction encoding apparatus according to an exemplary embodiment of this application. As shown in FIG. 12 and 13, the apparatus includes:
an acquisition module 1210, configured to acquire an image frame to be encoded, the image frame being divided into multiple coding units;
a prediction module 1220, configured to determine at least one motion vector prediction, MVP, of a current coding unit according to a pre-set inter prediction mode, and perform motion estimation on the current coding unit to obtain at least one motion vector, MV, of the current coding unit, in a case that, for each of the multiple coding units, the respective coding unit in turn is used as the current coding unit; select, from a plurality of candidate interpolation modes, a target interpolation mode and select, from a plurality of candidate motion modes, a target motion mode according to a target MVP and a target MV; and
a determining module 1230, configured to select the target MVP from the at least one MVP and select the target MV from the at least one MV, in order to form a vector pair comprising the target MVP and the target MV,
an encoding module 1240, configured to use the target interpolation mode and the target motion mode to encode the current coding unit.

In an optional embodiment, the acquisition module 1210 is further configured to acquire a quantity of the MVPs;

In a case that the at least one MVP comprises n MVPs, and for each of the n MVPs, the respective MVP is used in turn as a current MVP of the current coding unit, n being positive integer, the prediction module 1220 is configured to perform following steps to obtain the at least one MV of the current coding unit: performing the motion estimation on the current coding unit according to the current MVP to obtain an optimal MV, wherein the at least one MV comprises the optimal MV.

In an optional embodiment, the prediction module 1220 is further configured to combine each of the at least one MVP and each of the at least one MV respectively to obtain m vector pairs, each of the m vector pairs consisting of a respective MVP and a respective MV, m being n×n when the at least one MVP comprises n MVPs, and the at least one MV comprises n MVs, n being positive integer; and

the determining module 1230 is configured to perform following steps to select the target MVP from the at least one MVP and select the target MV from the at least one MV: determining a rate-distortion cost corresponding to each of the m vector pairs respectively; selecting a vector pair from the m vector pairs according to the rate-distortion cost corresponding to each of the m vector pairs, the selected vector pair comprising the target MVP and the target MV.

In an optional embodiment, the determining module 1230 is configured to perform following steps to select a vector pair from the m vector pairs: selecting a vector pair, corresponding to which the rate-distortion cost is minimum, from the m vector pairs.

In an optional embodiment, as shown in FIG. 13, the apparatus further includes:
a construction module 1310, configured to construct a first array and a second array, wherein the first array is configured to store a distortion of each of the at least one MV, and the second array is configured to store the at least one MV each corresponding to an MVP of the at least one MVP; and
a storage module 1320, configured to after obtaining each of at least one MV, store a distortion of the each of the at least one MV into the first array, and store the each of the at least one MV into the second array..

In an optional embodiment, the determining module 1230 is further configured to determine a reference frame corresponding to the target MVP; determine a number of bits corresponding to the target MVP; and

In an optional embodiment, the determining module 1230 is configured to perform following steps to determine a reference frame: determine a reference frame indexing mode corresponding to the target MVP; and obtaining the reference frame by using a reference frame indexing mode and the target MVP as an index.

In an optional embodiment, the determining module 1230 is configured to perform the following steps to determine a number of bits corresponding to the target MVP: determining the number of bits which are used to encode a difference between the target MV and the target MVP.

In an optional embodiment, the encoding module 1240 is configured to perform following steps to encode the current coding unit: encoding the current coding unit based on the target MVP, the target interpolation mode, the target motion mode, the reference frame and the number of bits.

To sum up, according to the inter prediction encoding apparatus provided in the embodiment of this application, in a scenario of encoding an image frame using a specified inter prediction mode (for example, NEWMV mode), a vector pair including a target MVP and a target motion vector (for example, an optimal vector pair) is determined first, and then an optimal interpolation mode and an optimal motion mode are determined for this vector pair, i.e., it is not necessary to perform interpolation mode traversal and motion mode traversal for all MVPs and motion vectors, thereby reducing the calculation amount of rate-distortion costs and the computational complexity, and further improving the encoding efficiency in the specified inter prediction mode.

The inter prediction encoding apparatus provided in the foregoing embodiments is illustrated with an example of division of the foregoing functional modules. In actual application, the functions may be allocated to and completed by different functional modules according to requirements, that is, the internal structure of the device is divided into different functional modules, to implement all or some of the functions described above. Moreover, the embodiments of the inter prediction encoding apparatus provided in the foregoing embodiments belong to the same concept as that of the embodiments of the inter prediction encoding method. For details of a specific implementation process thereof, refer to the method embodiments. Details are not described herein again.

FIG. 14 is a structural block diagram of a computer device 1400 according to an example embodiment of this application. The computer device 1400 may be a smartphone, a tablet computer, a Moving Picture Experts Group Audio Layer III (MP3) player, a Moving Picture Experts Group Audio Layer IV (MP4) player, a notebook computer, or a desktop computer; or may be a server. The computer device 1400 may be further referred to as another name such as user equipment, a portable terminal, a laptop terminal, or a desktop terminal.

Generally, the computer device 1400 includes a processor 1401 and a memory 1402.

The processor 1401 may include one or more processing cores, and may be, for example, a 4-core processor or an 8-core processor. The processor 1401 may be implemented in at least one hardware form of a digital signal processor (DSP), a field-programmable gate array (FPGA), and a programmable logic array (PLA). The processor 1401 may alternatively include a main processor and a coprocessor. The main processor is a processor configured to process data in an awake state, and is also referred to as a central processing unit (CPU). The coprocessor is a low power consumption processor configured to process the data in a standby state. In all embodiments, the processor 1401 may be integrated with a graphics processing unit (GPU). The GPU is configured to be responsible for rendering and drawing content that a display needs to display. In all embodiments, the processor 1401 may further include an AI processor. The AI processor is configured to process a computing operation related to machine learning.

The memory 1402 may include one or more computer-readable storage media that may be non-transitory. The memory 1402 may further include a high-speed random access memory and a non-volatile memory, for example, one or more disk storage devices or flash storage devices. In all embodiments, the non-transient computer-readable storage medium in the memory 1402 is configured to store at least one instruction, and the at least one instruction is used to be executed by the processor 1401 to implement the inter prediction encoding method.

A person skilled in the art may understand that the structure shown in FIG. 14 does not constitute any limitation on the computer device 1400, and the computer device may include more components or fewer components than those shown in the figure, or some components may be combined, or a different component deployment may be used.

In an example embodiment of this application, a computer-readable storage medium is further provided. The computer-readable storage medium stores a computer program. The computer program, when executed by a processor, implements the inter prediction encoding method.

Optionally, the computer-readable storage medium may include: a read-only memory (ROM), a random access memory (RAM), a solid state drive (SSD), an optical disc, or the like. The RAM may include a resistive RAM (ReRAM) and a dynamic RAM (DRAM). The sequence numbers of the foregoing embodiments of this application are merely for description purpose, and do not indicate the preference among the embodiments.

In an exemplary embodiment, a computer program product or a computer program is provided. The computer program product or the computer program includes computer instructions, and the computer instructions are stored in a computer-readable storage medium. A processor of the computer device reads the computer instructions from the computer-readable storage medium and executes the computer instructions to cause the computer device to perform the inter prediction encoding method.

Information (including but not limited to object device information, object personal information, etc.), data (including but not limited to data used for analysis, stored data, displayed data, etc.) and signals involved in this application are authorized by the object or fully authorized by all parties, and the collection, use and processing of relevant data need to comply with relevant laws, regulations and standards of relevant countries and regions. For example, image frames, videos, etc. involved in this application are all obtained under full authorization.

The foregoing descriptions are merely preferred embodiments of this application, but are not intended to limit this application.

## Claims

1. An inter prediction encoding method, the method being performed by a computer device, and the method comprising:
acquiring an image frame to be encoded, the image frame being divided into multiple coding units (601);
for each of the multiple coding units, using the respective coding unit in turn as a current coding unit and performing following steps on the current coding unit (602):
determining at least one motion vector prediction, MVP, of the current coding unit according to a pre-set inter prediction mode, and performing motion estimation on the current coding unit to obtain at least one motion vector, MV, of the current coding unit (603);
selecting a target MVP from the at least one MVP and selecting a target MV from the at least one MV, in order to form a vector pair comprising the target MVP and the target MV (604);
selecting, from a plurality of candidate interpolation modes, a target interpolation mode and selecting, from a plurality of candidate motion modes, a target motion mode according to the target MVP and the target MV (605);
using the target interpolation mode and the target motion mode to encode the current coding unit (606).

2. The method according to claim 1, wherein the performing motion estimation on the current coding unit to obtain at least one motion vector, MV of the current coding unit comprises:
in a case that the at least one MVP comprises n MVPs, for each of the n MVPs, using the respective MVP in turn as a current MVP of the current coding unit and performing following steps, n being positive integer:
performing the motion estimation on the current coding unit according to the current MVP to obtain an optimal MV, wherein the at least one MV comprises the optimal MV.

3. The method according to claim 1, wherein the selecting a target MVP from the at least one MVP and selecting a target MV from the at least one MV, in order to form a vector pair comprising the target MVP and the target MV comprises:
combining each of the at least one MVP and each of the at least one MV respectively to obtain m vector pairs, each of the m vector pairs consisting of a respective MVP and a respective MV, m being n×n when the at least one MVP comprises n MVPs, and the at least one MV comprises n MVs, n being positive integer;
determining a rate-distortion cost corresponding to each of the m vector pairs respectively;
selecting a vector pair from the m vector pairs according to the rate-distortion cost corresponding to each of the m vector pairs, the selected vector pair comprising the target MVP and the target MV.

4. The method according to claim 3, wherein the selecting a vector pair from the m vector pairs according to the rate-distortion cost corresponding to each of the m vector pairs comprises:
selecting a vector pair, corresponding to which the rate-distortion cost is minimum, from the m vector pairs.

5. The method according to claim 1, wherein the method further comprises:
constructing a first array and a second array, wherein the first array is configured to store a distortion of each of the at least one MV, and the second array is configured to store the at least one MV each corresponding to an MVP of the at least one MVP; and
after obtaining each of at least one MV, storing a distortion of the each of the at least one MV into the first array, and storing the each of the at least one MV into the second array.

6. The method according to any one of claims 1 to 5, wherein using the target interpolation mode and the target motion mode to encode the current coding unit comprises:
determining a reference frame corresponding to the target MVP;
determining a number of bits corresponding to the target MVP; and
encoding the current coding unit based on the target MVP, the target interpolation mode, the target motion mode, the reference frame and the number of bits.

7. The method according to claim 6, wherein the determining a reference frame corresponding to the target MVP comprises:
determining a reference frame indexing mode corresponding to the target MVP; and
obtaining the reference frame by using a reference frame indexing mode and the target MVP as an index.

8. The method according to claim 6, wherein the determining a number of bits corresponding to the target MVP comprises:
determining the number of bits which are used to encode a difference between the target MV and the target MVP.

9. An inter prediction encoding apparatus, the apparatus comprising:
an acquisition module (1210), configured to acquire an image frame to be encoded, the image frame being divided into multiple coding units;
a prediction module (1220), configured to determine at least one motion vector prediction, MVP, of a current coding unit according to a pre-set inter prediction mode, and perform motion estimation on the current coding unit to obtain at least one motion vector, MV, of the current coding unit, in a case that, for each of the multiple coding units, the respective coding unit in turn is used as the current coding unit; select, from a plurality of candidate interpolation modes, a target interpolation mode and select, from a plurality of candidate motion modes, a target motion mode according to a target MVP and a target MV;
a determining module (1230), configured to select the target MVP from the at least one MVP and select the target MV from the at least one MV, in order to form a vector pair comprising the target MVP and the target MV; and
an encoding module (1240), configured to use the target interpolation mode and the target motion mode to encode the current coding unit.

10. The apparatus according to claim 9, wherein in a case that the at least one MVP comprises n MVPs, and for each of the n MVPs, the respective MVP is used in turn as a current MVP of the current coding unit, n being positive integer, the prediction module is configured to perform following steps to obtain the at least one MV of the current coding unit:
performing the motion estimation on the current coding unit according to the current MVP to obtain an optimal MV, wherein the at least one MV comprises the optimal MV.

11. The apparatus according to claim 9, wherein the prediction module is further configured to combine each of the at least one MVP and each of the at least one MV respectively to obtain m vector pairs, each of the m vector pairs consisting of a respective MVP and a respective MV, m being n×n when the at least one MVP comprises n MVPs, and the at least one MV comprises n MVs, n being positive integer; and
the determining module is configured to perform following steps to select the target MVP from the at least one MVP and select the target MV from the at least one MV: determining a rate-distortion cost corresponding to each of the m vector pairs respectively; selecting a vector pair from the m vector pairs according to the rate-distortion cost corresponding to each of the m vector pairs, the selected vector pair comprising the target MVP and the target MV.

12. The apparatus according to claim 11, wherein the determining module is configured to perform following steps to select a vector pair from the m vector pairs: selecting a vector pair, corresponding to which the rate-distortion cost is minimum, from the m vector pairs.

13. A computer device, comprising a processor and a memory, the memory storing a computer program, the computer program being loaded and executed by the processor to implement the inter prediction encoding method according to any one of claims 1 to 8.

14. A computer-readable storage medium, storing a computer program, the computer program being loaded and executed by a processor to implement the inter prediction encoding method according to any one of claims 1 to 8.

15. A computer program product, comprising computer instructions, the computer instructions being stored in a computer-readable storage medium, and a processor reading and executing the computer instructions from the computer-readable storage medium to implement the inter prediction encoding method according to any one of claims 1 to 8.

## Patentansprüche

1. Interprädiktionscodierungsverfahren, wobei das Verfahren von einem Computergerät ausgeführt wird und das Verfahren umfasst:
Erfassen eines zu codierenden Einzelbilds, wobei das Einzelbild in mehrere Codierungseinheiten (601) unterteilt ist;
für jede der mehreren Codierungseinheiten, Verwenden der jeweiligen Codierungseinheit der Reihe nach als aktuelle Codierungseinheit und Durchführen der folgenden Schritte an der aktuellen Codierungseinheit (602):
Bestimmen mindestens einer Bewegungsvektorprädiktion, MVP, der aktuellen Codierungseinheit gemäß einem voreingestellten Interprädiktionsmodus und Durchführen einer Bewegungsschätzung an der aktuellen Codierungseinheit, um mindestens einen Bewegungsvektor, MV, der aktuellen Codierungseinheit zu erhalten (603);
Auswählen eines Ziel-MVP aus dem mindestens einen MVP und Auswählen eines Ziel-MV aus dem mindestens einen MV, um ein Vektorpaar zu bilden, das den Ziel-MVP und den Ziel-MV umfasst (604);
Auswählen, aus einer Mehrzahl von Interpolationsmodus-Kandidaten, eines Ziel-Interpolationsmodus und Auswählen, aus einer Mehrzahl von Bewegungsmodus-Kandidaten, eines Ziel-Bewegungsmodus gemäß dem Ziel-MVP und dem Ziel-MV (605);
Verwenden des Ziel-Interpolationsmodus und des Ziel-Bewegungsmodus zum Codieren der aktuellen Codierungseinheit (606).

2. Verfahren nach Anspruch 1, wobei das Durchführen einer Bewegungsschätzung an der aktuellen Codierungseinheit, um mindestens einen Bewegungsvektor, MV der aktuellen Codierungseinheit zu erhalten, umfasst:
in einem Fall, dass der mindestens eine MVP n MVPs umfasst, für jeden der n MVPs, Verwenden des jeweiligen MVP der Reihe nach als aktuellen MVP der aktuellen Codierungseinheit und Durchführen der folgenden Schritte, wobei n eine positive ganze Zahl ist:
Durchführen der Bewegungsschätzung an der aktuellen Codierungseinheit gemäß dem aktuellen MVP, um einen optimalen MV zu erhalten, wobei der mindestens eine MV den optimalen MV umfasst.

3. Verfahren nach Anspruch 1, wobei das Auswählen eines Ziel-MVP aus dem mindestens einen MVP und das Auswählen eines Ziel-MV aus dem mindestens einen MV, um ein Vektorpaar zu bilden, das den Ziel-MVP und den Ziel-MV umfasst, umfasst: Kombinieren jedes der mindestens einen MVP und jedes der mindestens einen MV jeweils, um m Vektorpaare zu erhalten, wobei jedes der m Vektorpaare aus einem jeweiligen MVP und einem jeweiligen MV besteht, wobei m n×n ist, wenn der mindestens eine MVP n MVPs umfasst und der mindestens eine MV n MVs umfasst, wobei n eine positive ganze Zahl ist;
Bestimmen von Rate-Distortion-Kosten, die jedem der m Vektorpaare jeweils entsprechen; Auswählen eines Vektorpaars aus den m Vektorpaaren gemäß den Rate-Distortion-Kosten, die jedem der m Vektorpaare entsprechen, wobei das ausgewählte Vektorpaar den Ziel-MVP und den Ziel-MV umfasst.

4. Verfahren nach Anspruch 3, wobei das Auswählen eines Vektorpaars aus den m Vektorpaaren gemäß den Rate-Distortion-Kosten, die jedem der m Vektorpaare entsprechen, umfasst:
Auswählen eines Vektorpaars, dessen Rate-Distortion-Kosten minimal sind, aus den m Vektorpaaren.

5. Verfahren nach Anspruch 1, wobei das Verfahren ferner umfasst:
Konstruieren eines ersten Arrays und eines zweiten Arrays, wobei das erste Array dazu konfiguriert ist, eine Verzerrung jedes der mindestens einen MV zu speichern, und das zweite Array dazu konfiguriert ist, den mindestens einen MV zu speichern, der jeweils einem MVP des mindestens einen MVP entspricht; und
nach Erhalten jedes der mindestens einen MV, Speichern einer Verzerrung jedes der mindestens einen MV in das erste Array und Speichern jedes der mindestens einen MV in das zweite Array.

6. Verfahren nach einem der Ansprüche 1 bis 5, wobei das Verwenden des Ziel-Interpolationsmodus und des Ziel-Bewegungsmodus zum Codieren der aktuellen Codierungseinheit umfasst:
Bestimmen eines Referenzbilds, das dem Ziel-MVP entspricht;
Bestimmen einer Bitanzahl, die dem Ziel-MVP entspricht; und
Codieren der aktuellen Codierungseinheit basierend auf dem Ziel-MVP, dem Ziel-Interpolationsmodus, dem Ziel-Bewegungsmodus, dem Referenzbild und der Bitanzahl.

7. Verfahren nach Anspruch 6, wobei das Bestimmen eines Referenzbilds, das dem Ziel-MVP entspricht, umfasst:
Bestimmen eines Referenzbildindexierungsmodus, der dem Ziel-MVP entspricht; und
Erhalten des Referenzbilds durch Verwenden eines Referenzbildindexierungsmodus und des Ziel-MVP als Index.

8. Verfahren nach Anspruch 6, wobei das Bestimmen einer Bitanzahl, die dem Ziel-MVP entspricht, umfasst:
Bestimmen der Bitanzahl, die verwendet wird, um eine Differenz zwischen dem Ziel-MV und dem Ziel-MVP zu codieren.

9. Interprädiktionscodierungsvorrichtung, umfassend:
ein Erfassungsmodul (1210), das dazu konfiguriert ist, ein zu codierendes Einzelbild zu erfassen, wobei das Einzelbild in mehrere Codierungseinheiten unterteilt ist;
ein Prädiktionsmodul (1220), das dazu konfiguriert ist, mindestens eine Bewegungsvektorprädiktion, MVP, einer aktuellen Codierungseinheit gemäß einem voreingestellten Interprädiktionsmodus zu bestimmen und eine Bewegungsschätzung an der aktuellen Codierungseinheit durchzuführen, um mindestens einen Bewegungsvektor, MV, der aktuellen Codierungseinheit zu erhalten, in einem Fall, dass für jede der mehreren Codierungseinheiten die jeweilige Codierungseinheit der Reihe nach als die aktuelle Codierungseinheit verwendet wird; aus einer Mehrzahl von Interpolationsmodus-Kandidaten einen Ziel-Interpolationsmodus auszuwählen und aus einer Mehrzahl von Bewegungsmodus-Kandidaten einen Ziel-Bewegungsmodus gemäß einem Ziel-MVP und einem Ziel-MV auszuwählen;
ein Bestimmungsmodul (1230), das dazu konfiguriert ist, den Ziel-MVP aus dem mindestens einen MVP auszuwählen und den Ziel-MV aus dem mindestens einen MV auszuwählen, um ein Vektorpaar zu bilden, das den Ziel-MVP und den Ziel-MV umfasst; und
ein Codierungsmodul (1240), das dazu konfiguriert ist, den Ziel-Interpolationsmodus und den Ziel-Bewegungsmodus zu verwenden, um die aktuelle Codierungseinheit zu codieren.

10. Vorrichtung nach Anspruch 9, wobei in einem Fall, dass der mindestens eine MVP n MVPs umfasst, und für jeden der n MVPs der jeweilige MVP der Reihe nach als aktueller MVP der aktuellen Codierungseinheit verwendet wird, wobei n eine positive ganze Zahl ist, das Prädiktionsmodul dazu konfiguriert ist, folgende Schritte durchzuführen, um den mindestens einen MV der aktuellen Codierungseinheit zu erhalten:
Durchführen der Bewegungsschätzung an der aktuellen Codierungseinheit gemäß dem aktuellen MVP, um einen optimalen MV zu erhalten, wobei der mindestens eine MV den optimalen MV umfasst.

11. Vorrichtung nach Anspruch 9, wobei das Prädiktionsmodul ferner dazu konfiguriert ist, jeden der mindestens einen MVP und jeden der mindestens einen MV jeweils zu kombinieren, um m Vektorpaare zu erhalten, wobei jedes der m Vektorpaare aus einem jeweiligen MVP und einem jeweiligen MV besteht, wobei m n×n ist, wenn der mindestens eine MVP n MVPs umfasst und der mindestens eine MV n MVs umfasst, wobei n eine positive ganze Zahl ist; und
das Bestimmungsmodul dazu konfiguriert ist, folgende Schritte durchzuführen, um den Ziel-MVP aus dem mindestens einen MVP auszuwählen und den Ziel-MV aus dem mindestens einen MV auszuwählen: Bestimmen von Rate-Distortion-Kosten, die jedem der m Vektorpaare jeweils entsprechen; Auswählen eines Vektorpaars aus den m Vektorpaaren gemäß den Rate-Distortion-Kosten, die jedem der m Vektorpaare entsprechen, wobei das ausgewählte Vektorpaar den Ziel-MVP und den Ziel-MV umfasst.

12. Vorrichtung nach Anspruch 11, wobei das Bestimmungsmodul dazu konfiguriert ist, folgende Schritte durchzuführen, um ein Vektorpaar aus den m Vektorpaaren auszuwählen: Auswählen eines Vektorpaars, dessen Rate-Distortion-Kosten minimal sind, aus den m Vektorpaaren.

13. Computergerät, umfassend einen Prozessor und einen Speicher, wobei der Speicher ein Computerprogramm speichert, wobei das Computerprogramm von dem Prozessor geladen und ausgeführt wird, um das Interprädiktionscodierungsverfahren nach einem der Ansprüche 1 bis 8 zu implementieren.

14. Computerlesbares Speichermedium, ein Computerprogramm speichernd, wobei das Computerprogramm von einem Prozessor geladen und ausgeführt wird, um das Interprädiktionscodierungsverfahren nach einem der Ansprüche 1 bis 8 zu implementieren.

15. Computerprogrammprodukt, umfassend Computeranweisungen, wobei die Computeranweisungen in einem computerlesbaren Speichermedium gespeichert sind und ein Prozessor die Computeranweisungen von dem computerlesbaren Speichermedium liest und ausführt, um das Interprädiktionscodierungsverfahren nach einem der Ansprüche 1 bis 8 zu implementieren.

## Revendications

1. Procédé de codage par inter-prédiction, le procédé étant mis en œuvre par un dispositif informatique, et le procédé comprenant :
l'acquisition d'une trame d'image à coder, la trame d'image étant divisée en plusieurs unités de codage (601) ;
pour chacune des plusieurs unités de codage, l'utilisation de l'unité de codage respective à son tour comme unité de codage courante et la réalisation des étapes suivantes sur l'unité de codage courante (602) :
la détermination d'au moins une prédiction de vecteur de mouvement, MVP, de l'unité de codage courante selon un mode d'inter-prédiction prédéfini, et la réalisation d'une estimation de mouvement sur l'unité de codage courante pour obtenir au moins un vecteur de mouvement, MV, de l'unité de codage courante (603) ;
la sélection d'un MVP cible parmi le ou les MVP et la sélection d'un MV cible parmi le ou les MV, afin de former une paire de vecteurs comprenant le MVP cible et le MV cible (604) ;
la sélection, parmi une pluralité de modes d'interpolation candidats, d'un mode d'interpolation cible et la sélection, parmi une pluralité de modes de mouvement candidats, d'un mode de mouvement cible selon le MVP cible et le MV cible (605) ;
l'utilisation du mode d'interpolation cible et du mode de mouvement cible pour coder l'unité de codage courante (606).

2. Procédé selon la revendication 1, dans lequel la réalisation d'une estimation de mouvement sur l'unité de codage courante pour obtenir au moins un vecteur de mouvement, MV de l'unité de codage courante comprend :
dans le cas où le ou les MVP comprennent n MVP, pour chacun des n MVP, l'utilisation du MVP respectif à son tour comme MVP courant de l'unité de codage courante et la réalisation des étapes suivantes, n étant un entier positif :
la réalisation de l'estimation de mouvement sur l'unité de codage courante selon le MVP courant pour obtenir un MV optimal, dans lequel le ou les MV comprennent le MV optimal.

3. Procédé selon la revendication 1, dans lequel la sélection d'un MVP cible parmi le ou les MVP et la sélection d'un MV cible parmi le ou les MV, afin de former une paire de vecteurs comprenant le MVP cible et le MV cible comprend : la combinaison de chacun du ou des MVP et de chacun du ou des MV respectivement pour obtenir m paires de vecteurs, chacune des m paires de vecteurs étant constituée d'un MVP respectif et d'un MV respectif, m étant n×n lorsque le ou les MVP comprennent n MVP, et le ou les MV comprennent n MV, n étant un entier positif ;
la détermination d'un coût débit-distorsion correspondant à chacune des m paires de vecteurs respectivement ;
la sélection d'une paire de vecteurs parmi les m paires de vecteurs selon le coût débit-distorsion correspondant à chacune des m paires de vecteurs, la paire de vecteurs sélectionnée comprenant le MVP cible et le MV cible.

4. Procédé selon la revendication 3, dans lequel la sélection d'une paire de vecteurs parmi les m paires de vecteurs selon le coût débit-distorsion correspondant à chacune des m paires de vecteurs comprend :
la sélection d'une paire de vecteurs, dont le coût débit-distorsion est minimal, parmi les m paires de vecteurs.

5. Procédé selon la revendication 1, dans lequel le procédé comprend en outre :
la construction d'un premier tableau et d'un second tableau, dans lequel le premier tableau est configuré pour stocker une distorsion de chacun du ou des MV, et le second tableau est configuré pour stocker le ou les MV correspondant chacun à un MVP du ou des MVP ; et
après l'obtention de chacun du ou des MV, le stockage d'une distorsion de chacun du ou des MV dans le premier tableau, et le stockage de chacun du ou des MV dans le second tableau.

6. Procédé selon l'une quelconque des revendications 1 à 5, dans lequel l'utilisation du mode d'interpolation cible et du mode de mouvement cible pour coder l'unité de codage courante comprend :
la détermination d'une trame de référence correspondant au MVP cible ;
la détermination d'un nombre de bits correspondant au MVP cible ; et
le codage de l'unité de codage courante sur la base du MVP cible, du mode d'interpolation cible, du mode de mouvement cible, de la trame de référence et du nombre de bits.

7. Procédé selon la revendication 6, dans lequel la détermination d'une trame de référence correspondant au MVP cible comprend :
la détermination d'un mode d'indexation de trame de référence correspondant au MVP cible ; et l'obtention de la trame de référence en utilisant un mode d'indexation de trame de référence et le MVP cible comme index.

8. Procédé selon la revendication 6, dans lequel la détermination d'un nombre de bits correspondant au MVP cible comprend :
la détermination du nombre de bits qui sont utilisés pour coder une différence entre le MV cible et le MVP cible.

9. Appareil de codage par inter-prédiction, l'appareil comprenant :
un module d'acquisition (1210), configuré pour acquérir une trame d'image à coder, la trame d'image étant divisée en plusieurs unités de codage ;
un module de prédiction (1220), configuré pour déterminer au moins une prédiction de vecteur de mouvement, MVP, d'une unité de codage courante selon un mode d'inter-prédiction prédéfini, et réaliser une estimation de mouvement sur l'unité de codage courante pour obtenir au moins un vecteur de mouvement, MV, de l'unité de codage courante, dans le cas où, pour chacune des plusieurs unités de codage, l'unité de codage respective est utilisée à son tour comme unité de codage courante ; sélectionner, parmi une pluralité de modes d'interpolation candidats, un mode d'interpolation cible et sélectionner, parmi une pluralité de modes de mouvement candidats, un mode de mouvement cible selon un MVP cible et un MV cible ;
un module de détermination (1230), configuré pour sélectionner le MVP cible parmi le ou les MVP et sélectionner le MV cible parmi le ou les MV, afin de former une paire de vecteurs comprenant le MVP cible et le MV cible ; et
un module de codage (1240), configuré pour utiliser le mode d'interpolation cible et le mode de mouvement cible pour coder l'unité de codage courante.

10. Appareil selon la revendication 9, dans lequel dans le cas où le ou les MVP comprennent n MVP, et pour chacun des n MVP, le MVP respectif est utilisé à son tour comme MVP courant de l'unité de codage courante, n étant un entier positif, le module de prédiction est configuré pour réaliser les étapes suivantes afin d'obtenir le ou les MV de l'unité de codage courante :
la réalisation de l'estimation de mouvement sur l'unité de codage courante selon le MVP courant pour obtenir un MV optimal, dans lequel le ou les MV comprennent le MV optimal.

11. Appareil selon la revendication 9, dans lequel le module de prédiction est en outre configuré pour combiner chacun du ou des MVP et chacun du ou des MV respectivement pour obtenir m paires de vecteurs, chacune des m paires de vecteurs étant constituée d'un MVP respectif et d'un MV respectif, m étant n×n lorsque le ou les MVP comprennent n MVP, et le ou les MV comprennent n MV, n étant un entier positif ; et
le module de détermination est configuré pour réaliser les étapes suivantes afin de sélectionner le MVP cible parmi le ou les MVP et de sélectionner le MV cible parmi le ou les MV : la détermination d'un coût débit-distorsion correspondant à chacune des m paires de vecteurs respectivement ; la sélection d'une paire de vecteurs parmi les m paires de vecteurs selon le coût débit-distorsion correspondant à chacune des m paires de vecteurs, la paire de vecteurs sélectionnée comprenant le MVP cible et le MV cible.

12. Appareil selon la revendication 11, dans lequel le module de détermination est configuré pour réaliser les étapes suivantes afin de sélectionner une paire de vecteurs parmi les m paires de vecteurs : la sélection d'une paire de vecteurs, dont le coût débit-distorsion est minimal, parmi les m paires de vecteurs.

13. Dispositif informatique, comprenant un processeur et une mémoire, la mémoire stockant un programme informatique, le programme informatique étant chargé et exécuté par le processeur pour mettre en œuvre le procédé de codage par inter-prédiction selon l'une quelconque des revendications 1 à 8.

14. Support de stockage lisible par ordinateur, stockant un programme informatique, le programme informatique étant chargé et exécuté par un processeur pour mettre en œuvre le procédé de codage par inter-prédiction selon l'une quelconque des revendications 1 à 8.

15. Produit-programme informatique, comprenant des instructions informatiques, les instructions informatiques étant stockées dans un support de stockage lisible par ordinateur, et un processeur lisant et exécutant les instructions informatiques depuis le support de stockage lisible par ordinateur pour mettre en œuvre le procédé de codage par inter-prédiction selon l'une quelconque des revendications 1 à 8.
